# EUROPEAN PATENT APPLICATION

(11) **EP 4 697 135 A1**
(43) Date of publication of application: **18.02.2026**
(21) Application number: 25710974.4
(22) Date of filing: 11.03.2025
(51) Int. Cl.: G06F 1/16, H04M 1/02, G09F 9/30

(54) **FOLDABLE ELECTRONIC DEVICE INCLUDING MAGNETS**

(30) Priority: 29.06.2024 KR 20240085853; 06.08.2024 KR 20240104973
(71) Applicant: Samsung Electronics Co., Ltd, Suwon-si, Gyeonggi-do 16677 (KR)
(72) Inventor: JUNG, Songhee, Suwon-si, Gyeonggi-do 16677 (KR); KIM, Sunglak, Suwon-si, Gyeonggi-do 16677 (KR); KIM, Hyunmuk, Suwon-si, Gyeonggi-do 16677 (KR); RYU, Jooyeol, Suwon-si, Gyeonggi-do 16677 (KR); JANG, Gyudae, Suwon-si, Gyeonggi-do 16677 (KR); JUN, Jaeyoung, Suwon-si, Gyeonggi-do 16677 (KR); CHOI, Sunyong, Suwon-si, Gyeonggi-do 16677 (KR); CHOI, Jinwook, Suwon-si, Gyeonggi-do 16677 (KR)
(74) Representative: HGF
(86) International application number: PCT/KR2025/003211
(87) International publication number: WO 2026/005182

(57) **Abstract**

A foldable electronic device includes a foldable housing including a first housing part and a second housing part, a hinge assembly including hinge plates rotatably connecting the first housing part and the second housing part, each of the hinge plates including a first magnet, and a flexible display. The flexible display includes a display panel including a bending portion configured to be bent by rotation of the first housing part and the second housing part, a support plate disposed under the bending portion of the display panel and including a portion including a plurality of slits, and a second magnet overlapping the bending portion and the portion of the support plate, the second magnet being paired with the first magnet.

## Description

### [Technical Field]

The disclosure relate to a foldable electronic device including magnets.

### [Background Art]

An electronic device may include housing parts rotatably coupled to each other and a flexible display. Upon rotation of the housing parts, at least a portion of the flexible display may be bendable.

Unlike permanent magnets, electromagnets may be magnetized based on the application of an electric current. With no current applied, the electromagnet is either not magnetized, or is less strongly magnetized, so that the electromagnet may not cause an attractive force or may cause a reduced attractive force even when placed adjacent to one or more permanent magnets. With current applied to an electromagnet, the electromagnet may cause a greater attractive force with its adjacent magnets.

The above information is presented as background information only to assist with understanding of the disclosure. No determination has been made, and no assertion is made, as to whether any of the above might be applicable as prior art with regard to the disclosure.

### [Disclosure of Invention]

### [Technical Solution]

A foldable electronic device is provided. The foldable electronic device may include a foldable housing including a first housing part and a second housing part. The foldable electronic device may include a hinge assembly including hinge plates rotatably connecting the first housing part and the second housing part. Each of the hinge plates may include a first magnet. The foldable electronic device may include a flexible display. The flexible display may include a display panel including a first planar portion, a second planar portion, and a bending portion disposed between the first planar portion and the second planar portion configured to be bent by a rotation of the first housing part and the second housing part. The foldable electronic device may include a support plate disposed under the display panel to support the display panel. The support plate may include a first portion disposed under the first planar portion, a second portion disposed under the second planar portion, and a third portion disposed under the bending portion and including a plurality of slits. The foldable electronic device may include a second magnet overlapping the bending portion and the third portion and paired with the first magnet. An attractive force between the first magnet and the second magnet may be caused based on an unfolded state of the foldable electronic device.

A foldable electronic device is provided. The foldable electronic device may include a foldable housing including a first housing part, a second housing part, and a third housing part. The foldable electronic device may include a first hinge assembly including first hinge plates rotatably connecting the first housing part and the second housing part. Each of the first hinge plates may include a first magnet. The foldable electronic device may include a second hinge assembly including second hinge plates rotatably connecting the second housing part and the third housing part, each of the second hinge plates including a second magnet. The foldable electronic device may include a flexible display. The flexible display may include a display panel including a first bending portion configured to be bent by a rotation of the first housing part and the second housing part, and a second bending portion configured to be bent by a rotation of the second housing part and the third housing part. The foldable electronic device may include a support plate disposed under the display panel to support the display panel. The support plate may include a first portion disposed under the first bending portion and including a plurality of first slits, and a second portion disposed under the second bending portion and including a plurality of second slits. The foldable electronic device may include a third magnet disposed between the first bending portion and the first portion and overlapping the first magnet. The foldable electronic device may include a fourth magnet disposed between the second bending portion and the second portion of the support plate and overlapping the second magnet. An attractive force between the first magnet and the third magnet may be caused based on a first unfolded state in which the first housing part and the second housing part are unfolded. An attractive force between the second magnet and the fourth magnet may be caused based on a second unfolded state in which the second housing part and the third housing part are unfolded.

### [Brief Description of the Drawings]

FIG. 1 is a block diagram of an electronic device in a network environment according to an embodiment.
FIG. 2A illustrates an example of an unfolded state of a foldable electronic device according to an embodiment.
FIG. 2B illustrates an example of a folded state of a foldable electronic device according to an embodiment.
FIG. 2C is an exploded view of a foldable electronic device according to an embodiment.
FIG. 3 is a cross-sectional view of the foldable electronic device taken along line A-A' of FIG. 2A according to an embodiment.
FIG. 4 is a block diagram illustrating components of a foldable electronic device according to an embodiment.
FIG. 5 is a flowchart illustrating an operation of controlling supplying of current to an electromagnet by a foldable electronic device according to an embodiment.
FIGS. 6A, 6B, 6C, 6D, and 6E illustrate arrangement structures of a second magnet according to various embodiments.
FIG. 6F is a plan view of a support plate shown in FIG. 6E.
FIGS. 7A, 7B, 7C, and 7D illustrate arrangement structures of a first magnet according to various embodiments.
FIG. 7E illustrates various shapes related to patterns of a second magnet shown in FIG. 7D.
FIGS. 8A and 8B illustrate a foldable electronic device including a flexible printed circuit board connected to an electromagnet, according to an embodiment.
FIG. 9A illustrates a foldable electronic device including a cushion according to an embodiment.
FIG. 9B is a rear view of a flexible display of a foldable electronic device including a cushion according to an embodiment.
FIG. 10A illustrates an example of a first state of an electronic device.
FIG. 10B illustrates an example of a second state of an electronic device.
FIG. 10C illustrates an example of a third state of an electronic device.
FIG. 11A is a plan view of an electronic device with a flexible display removed.
FIG. 11B is a rear view of an electronic device with a rear cover and a display removed.
FIG. 12 illustrates a foldable electronic device according to an embodiment.
FIGS. 13A, 13B, 13C, 13D, 13E, and 13F each illustrate arrangement structures of a first magnet according to various embodiments.
FIG. 14 is a block diagram illustrating components of a foldable electronic device according to an embodiment.
FIG. 15 is a flowchart illustrating an operation of controlling supplying of current to a first electromagnet by a foldable electronic device according to an embodiment.
FIG. 16 is a flowchart illustrating an operation of controlling supplying of current to a second electromagnet by a foldable electronic device according to an embodiment, according to an embodiment.
FIGS. 17, 18, and 19 each illustrate folding or unfolding operations of a foldable electronic device according to various embodiments.

### [Mode for Carrying out the Invention]

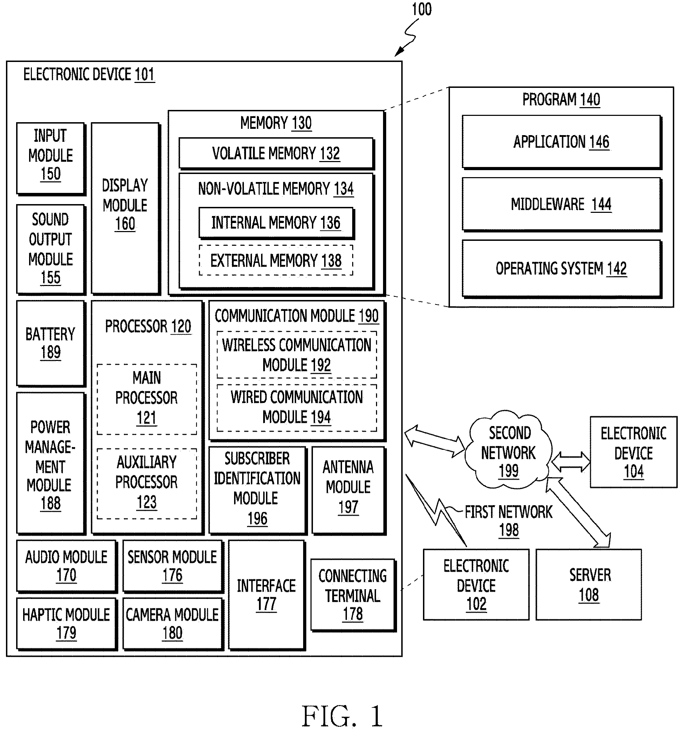

FIG. 1 is a block diagram of an electronic device 101 in a network environment 100 according to various embodiments.

Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may change a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may change an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side exterior surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra-low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

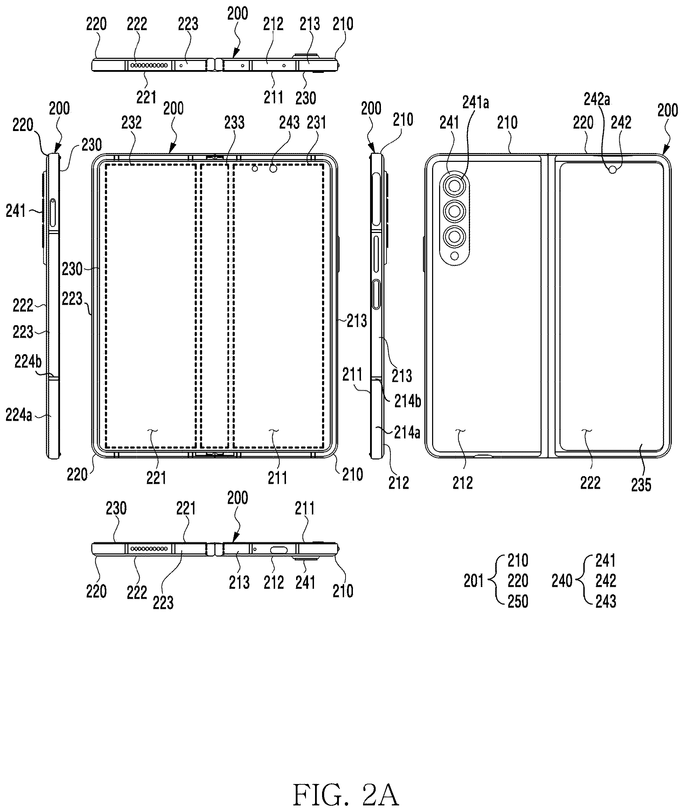

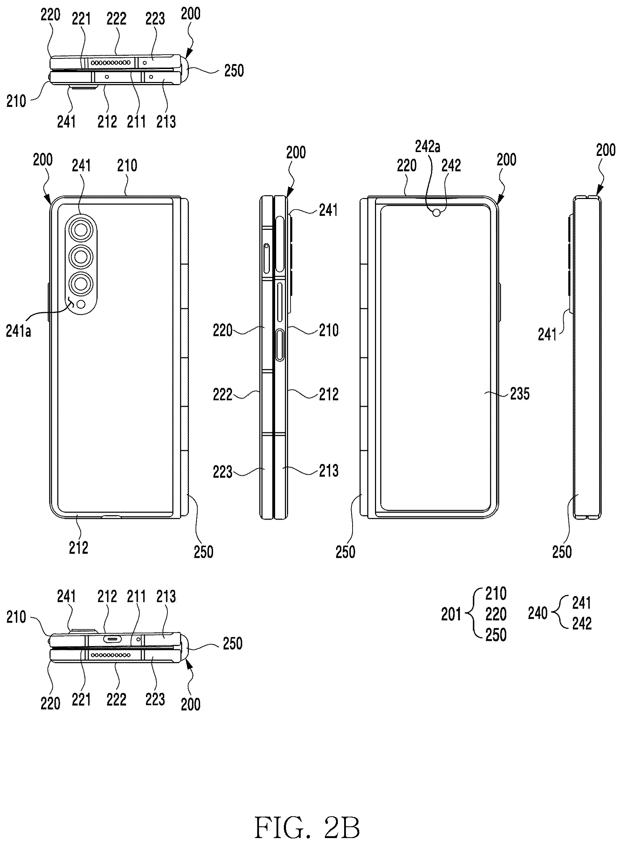

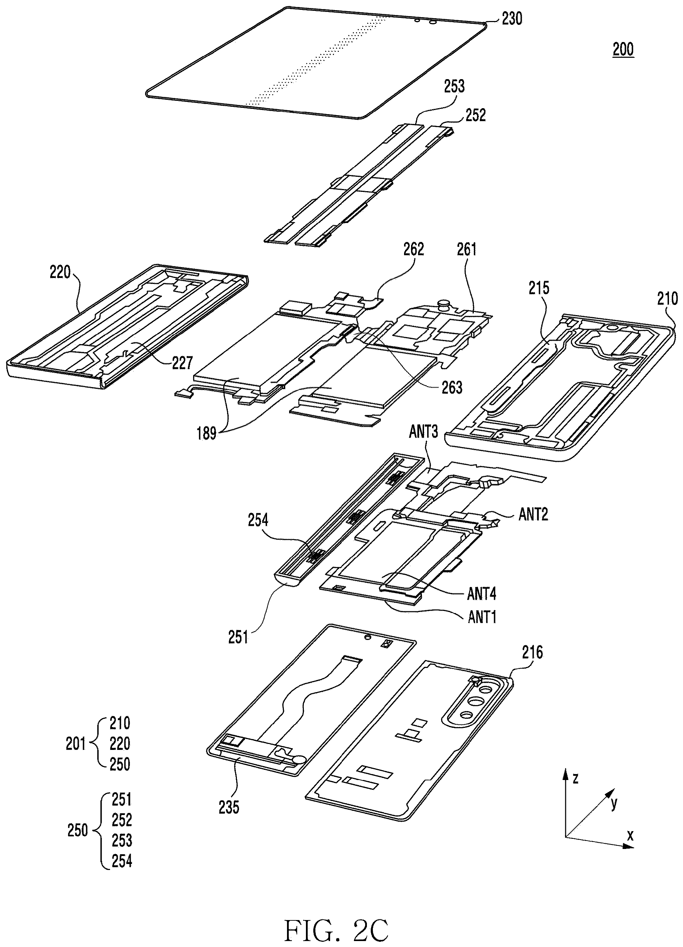

FIG. 2A illustrates an example of an unfolded state of a foldable electronic device according to an embodiment. FIG. 2B illustrates an example of a folded state of a foldable electronic device according to an embodiment. FIG. 2C is an exploded view of a foldable electronic device according to an embodiment.

Referring to FIGS. 2A, 2B, and 2C, an electronic device 101 of FIG. 1 described above may include a foldable electronic device 200. The foldable electronic device 200 may include a foldable housing 201, a flexible display 230 (e.g., the display module 160 of FIG. 1, a first display), or one or more cameras 240.

According to an embodiment, the foldable housing 201 may define an exterior surface of the foldable electronic device 200. For example, the foldable housing 201 is a physical appearance of the foldable electronic device 200 exposed to the outside and may accommodate components disposed inside the foldable electronic device 200. At least some of the components for implementing the functions of the foldable electronic device 200 may be disposed in the foldable housing 201. According to an embodiment, the foldable housing 201 may include a first housing part 210, a second housing part 220, and a hinge assembly 250.

According to an embodiment, the first housing part 210 may include a first surface 211, a second surface 212 opposite to the first surface 211, and a first side exterior surface 213 at least partially surrounding a periphery of the first surface 211 and a periphery of the second surface 212. For example, the first surface 211 may be referred to as a front exterior surface of the first housing part 210, and the second surface 212 may be referred to as a rear exterior surface of the first housing part 210. The first side exterior surface 213 may be connected to a periphery of the first surface 211 and a periphery of the second surface 212. The first surface 211, the second surface 212, and the first side exterior surface 213 may form an inner space of the first housing part 210. For example, at least one component may be disposed in a space surrounded by the first surface 211, the second surface 212, and the first side exterior surface 213.

For example, the second housing part 220 may include a third surface 221, a fourth surface 222 opposite the third surface 221, and a second side exterior surface 223 at least partially surrounding a periphery of the third surface 221 and a periphery of the fourth surface 222. For example, the third surface 221 may be referred to a front surface of the second housing part 220, and the fourth surface 222 may be referred to a rear surface of the second housing part 220. The second side exterior surface 223 may be connected to a periphery of the third surface 221 and a periphery of the fourth surface 222. The third surface 221, the fourth surface 222, and the second side exterior surface 223 may form an inner space of the second housing part 220. At least one component may be disposed within a space surrounded by the third surface 221, the fourth surface 222, and the second side exterior surface 223.

According to an embodiment, the flexible display 230 may be configured to display visual information. For example, the flexible display 230 may include a display area including a plurality of pixels. For example, an active area may be referred to as an active area displaying the visual information. For example, the flexible display 230 may define at least a part of the front surface of the foldable housing 201. For example, the flexible display 230 may at least partially form the first surface 211 and the third surface 221.

According to an embodiment, the flexible display 230 may include a first display area 231, a second display area 232, and a third display area 233 disposed between the first display area 231 and the second display area 232. The foldable electronic device 200 may further include a sub-display 235 distinguished from the flexible display 230. The sub-display 235 may at least partially form the fourth surface 222 of the second housing part 220. The sub-display 235 may be referred to as a cover display or a second display.

According to an embodiment, one or more cameras 240 may be configured to acquire an image based on receiving light from an external subject of the foldable electronic device 200. For example, the one or more cameras 240 may include first cameras 241, a second camera 242, and/or a third camera 243. For example, the first cameras 241 may be disposed within the first housing part 210. For example, the first housing part 210 may include at least one opening 241a overlapping the first cameras 241, when the foldable electronic device 200 is viewed from the above. The first cameras 241 may acquire an image based on receiving light from the outside of the foldable electronic device 200 through the at least one opening 241a. The first cameras 241 may be disposed to face the rear side of the foldable electronic device 200.

According to an embodiment, the second camera 242 may be disposed inside the second housing part 220. The second housing part 220 may include at least one opening 242a overlapping the second camera 242, when the foldable electronic device 200 is viewed from above. The second camera 242 may acquire an image based on receiving light from the outside of the foldable electronic device 200 through the at least one opening 242a. The second camera 242 may be disposed to face the rear side of the foldable electronic device 200.

According to an embodiment, the third camera 243 may be disposed inside the first housing part 210. For example, the first display area 231 of the flexible display 230 may include at least one opening overlapping the third camera 243 when the flexible display 230 is viewed from the above. The third camera 243 may acquire an image based on receiving light from the outside of the flexible display 230 through the at least one opening. The third camera 243 may be disposed face the front side of the foldable electronic device 200.

According to an embodiment, the second camera 242 and the third camera 243 may be disposed under the flexible display 230 or the sub-display 235 (e.g., -z direction). For example, the second camera 242 and/or the third camera 243 may include an under display camera (UDC) and/or a punch hole camera.

According to an embodiment, the first housing part 210 and the second housing part 220 may be rotatably coupled to each other. For example, the second housing part 220 may be rotatably coupled to the first housing part 210 with the hinge assembly 250.

According to an embodiment, the hinge assembly 250 may rotatably connect the first housing part 210 and the second housing part 220. The hinge assembly 250 may be disposed between the first housing part 210 and the second housing part 220 of the foldable electronic device 200 so that the foldable electronic device 200 can be folded. The hinge assembly 250 may allow the foldable electronic device 200 to change from an unfolded state to a folded state. The hinge assembly 250 may allow the foldable electronic device 200 to change from a folded state to an unfolded state. For example, the hinge assembly 250 may maintain the foldable electronic device 200 in an intermediate state between the unfolded state and the folded state.

According to an embodiment, the unfolded state may be referred to a state in which the first direction the first display area 231 faces and the second direction the second display area 232 faces are substantially the same. The folded state may be referred to a state in which the first direction is substantially opposite to the second direction. When the foldable electronic device 200 is in the folded state, the first housing part 210 and the second housing part 220 may be laid over or overlap each other.

According to an embodiment, when the foldable electronic device 200 is in a folded state and an intermediate state, the first direction and the second direction may be different from each other. When the foldable electronic device 200 is in the folded state, the first direction and the second direction may be opposite to each other. When the foldable electronic device 200 is in an intermediate state, the first direction may form an angle (e.g., angle greater than 0° and less than 180°) with respect to the second direction.

For example, the foldable electronic device 200 may include at least one conductive portion 214a and 224a, and at least one non-conductive portion 214b and 224b included in the first side exterior surface 213 and/or the third side exterior surface 223. For example, at least one conductive portion 214a and 224a may be separated from other conductive portions within the first side exterior surface 213 and/or the third side exterior surface 223 by contacting at least one non-conductive portion 214b and 224b. In an embodiment, the at least one conductive portion 214a and 224a may operate as an antenna radiator to be used for communication with an external electronic device.

Referring to FIG. 2C, the hinge assembly 250 may include a hinge cover 251, a first hinge plate 252, a second hinge plate 253, and a plurality of hinge modules 254. The hinge cover 251 may at least partially surround components of the hinge assembly 250 and form an exterior surface of the hinge assembly 250. When the foldable electronic device 200 is in a folded state, the hinge cover 251 may be at least partially exposed to the outside of the foldable electronic device 200 through a space between the first housing part 210 and the second housing part 220. When the foldable electronic device 200 is in an unfolded state, the hinge cover 251 may be covered by the first housing part 210 and the second housing part 220 so that it may not be exposed to the outside of the foldable electronic device 200.

According to an embodiment, the first hinge plate 252 and the second hinge plate 253 may be operatively coupled to the first housing part 210 and the second housing part 220, respectively, thereby rotatably connecting the first housing part 210 and the second housing part 220. For example, the first hinge plate 252 may be operatively coupled to a first bracket 215 of the first housing part 210, and the second hinge plate 253 may be operatively coupled to a second bracket 227 of the second housing part 220. As the first hinge plate 252 and the second hinge plate 253 are operatively coupled to the first bracket 215 and the second bracket 227, respectively, the first housing part 210 and the second housing part 220 may be rotatable based on a rotation of the first hinge plate 252 and the second hinge plate 253.

According to an embodiment, the plurality of hinge modules 254 may rotate the first hinge plate 252 and the second hinge plate 253. For example, the plurality of hinge modules 254 may include gears capable of rotating engaged with each other. The first hinge plate 252 and the second hinge plate 253 may be rotated based on a rotation of the gears of the plurality of hinge modules 254.

According to an embodiment, the first housing part 210 may include a first bracket 215 and a rear cover 216. The first bracket 215 may be disposed inside the first housing part 210 and may support at least one component disposed within the first housing part 210. The rear cover 216 may at least partially form the second surface 212 of the first housing part 210. For example, the second housing part 220 may include a second bracket 227. The second bracket 227 may be disposed inside the second housing part 220 and may support at least one component disposed within the second housing part 220. The sub-display 235 may be disposed beneath the second bracket 227 (e.g., in -z direction).

The foldable electronic device 200 according to an embodiment may include a plurality of electronic components for implementing various functions in addition to the one or more cameras 240 described above. For example, the foldable electronic device 200 may include a first printed circuit board 261, a second printed circuit board 262, a flexible printed circuit board 263, and/or a battery 189. The electronic components described above are only of examples and are not limited thereto.

For example, the first printed circuit board 261 and the second printed circuit board 262 may each provide electrical connection to the components in the foldable electronic device 200. The first printed circuit board 261 may be disposed in the first housing part 210, and the second printed circuit board 262 may be disposed in the second housing part 220. The first printed circuit board 261 may provide electrical connection between electronic components disposed in the first housing part 210. The second printed circuit board 262 may provide electrical connection between electronic components disposed in the second housing part 220. The flexible printed circuit board 263 may electrically connect the first printed circuit board 261 and the second printed circuit board 262. For example, the flexible printed circuit board 263 may extend from the first printed circuit board 261 to the second printed circuit board 262 across the hinge assembly 250. The flexible printed circuit board 263 may at least partially overlap the hinge assembly 250.

According to an embodiment, the battery 189 is a device for supplying power to at least one component of the foldable electronic device 200, and may include, for example, a non-rechargeable primary battery and/or a rechargeable secondary battery.

According to an embodiment, the foldable electronic device 200 may include a plurality of antennas ANT1, ANT2, ANT3, or ANT4 to be used for communication with external electronic devices. For example, the foldable electronic device 200 may include a main antenna ANT1, a sub-antenna ANT2, an ultra-wide band (UWB) antenna ANT3, and/or an antenna ANT4 for short-range wireless communication. However, the disclosure is not limited thereto.

Hereinafter, one or more components to be described with reference to the drawings may be implemented together with the components of the foldable electronic device 200 described with reference to FIGS. 2A, 2B, and 2C. The same reference numerals are given to the same components as the above-described components, and overlapping descriptions may be omitted.

In the disclosure, the relative terms such as 'above' and 'below' may be used to describe a relative position between components. For example, when the foldable electronic device 200 illustrated in the drawing is overturned, the above and the below may be interchangeable with each other.

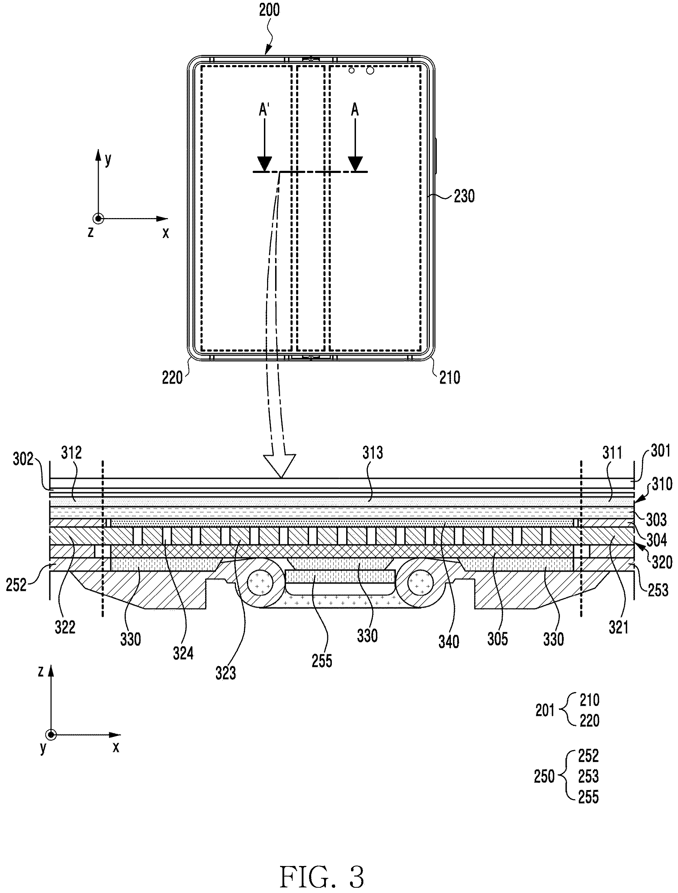

FIG. 3 is a cross-sectional view taken along line A-A' of a foldable electronic device according to an embodiment.

Referring to FIG. 3, the foldable electronic device 200 (e.g., the electronic device 101 of FIG. 1) according to an embodiment may include a foldable housing 201, a hinge assembly 250, a flexible display 230, a first magnet 330, and a second magnet 340. The components described with reference to FIGS. 2A, 2B, and 2C may be substantially the same as the components described below, and any overlapping descriptions thereof may be omitted or briefly described. The same reference numerals may be given to the same components as the above-described components.

According to an embodiment, the foldable housing 201 may include a first housing part 210 and a second housing part 220. The hinge assembly 250 may rotatably connect the first housing part 210 and the second housing part 220. For example, the first housing part 210 may be coupled to a first hinge plate 252, and the second housing part 220 may be coupled to a second hinge plate 253.

According to an embodiment, the flexible display 230 may include a display panel 310 and a support plate 320.

According to an embodiment, the display panel 310 may include a plurality of pixels for providing visual information. The display panel 310 may be electrically connected to a display driver integrated circuitry. The display driver integrated circuitry may be configured to display visual information through the display panel 310 by controlling a plurality of pixels arranged in the display panel 310. A window (e.g., cover glass) 301 for protecting the display panel 310 may be disposed on the display panel 310. The window 301 may be attached to a front surface of the display panel 310 by means of adhesive layers 302.

According to an embodiment, the display panel 310 may include a first planar portion 311, a second planar portion 312, and a bending portion 313. The first planar portion 311 may be supported by the first housing part 210. The second planar portion 312 may be supported by the second housing part 220. The bending portion 313 may be positioned between the first planar portion 311 and the second planar portion 312.

According to an embodiment, the support plate 320 may be disposed under the display panel 310 (e.g., -z direction) to support the display panel 310. The support plate 320 may provide rigidity to the flexible display 230 by supporting the display panel 310. According to an embodiment, the support plate 320 may include a first portion 321 disposed under the first planar portion 311 of the display panel 310, a second portion 322 disposed under the second planar portion 312, and a third portion 323 disposed under the bending portion 313 of the display panel 310. The third portion 323 may be disposed between the first portion 321 and the second portion 322.

According to an embodiment, the third portion 323 may include a plurality of slits 324 to be bent along with the bending portion 313. When the display panel 310 is bent, a tensile force may be applied to the plurality of slits 324, and then the plurality of slits 324 may be deformed in response to the tensile force. Due to the deformation of the plurality of slits 324, the third portion 323 of the support plate 320 may be bent together with the bending portion 313 of the display panel 310. The plurality of slits 324 may be referred to as a lattice pattern or a lattice structure in terms of forming a lattice in the third portion 323.

According to an embodiment, the bending portion 313 of the display panel 310 may be configured to be bent by rotation of the first housing part 210 and the second housing part 220. For example, in the unfolded state of the foldable electronic device 200 in which the first housing part 210 and the second housing part 220 are disposed on substantially the same plane, the bending portion 313 may be substantially flat. As the foldable electronic device 200 changes from an unfolded state to a folded state, the bending portion 313 may be at least partially bent. As the bending portion 313 is at least partially bent, stress may be applied to the bending portion 313. Such stress may cause a crease of the bending portion 313. When such a crease occurs in the bending portion 313, the crease in the bending portion 313 of the flexible display 230 in the unfolded state may be visually recognized by a user, and thus it may affect the visibility of the flexible display 230, leading to deterioration of the user experience.

The foldable electronic device 200 according to an embodiment may include a first magnet 330 disposed in the hinge plates 252 and 253 of the hinge assembly 250 and a second magnet 340 disposed in the flexible display 230 in order to reduce creases caused in the bending portion 313. The first magnet 330 and the second magnet 340 may be paired with each other. The first magnet 330 and the second magnet 340 may be a film formed of a magnetic material or a film to which magnetic powder is added, but the disclosure is not limited thereto.

According to an embodiment, the flexible display 230 may include a protective film 303 for protecting the display panel 310. The second magnet 340 may be disposed between the protective film 303 and the third portion 323 of the support plate 320. For example, the second magnet 340 may be disposed below the protective film 303 (e.g., -z direction) and above the third portion 323 (e.g., +z direction). As the second magnet 340 is disposed above the third portion 323, the second magnet 340 may bend together with the bending portion 313 when the bending portion 313 is bent. The second magnet 340 may have flexibility. A cushion 305 for mitigating an impact applied to the bending portion 313 may be disposed under the third portion 323 of the support plate 320. The cushion 305 may overlap the first magnet 330 and the second magnet 340. The cushion 305 may be formed of a substantially opaque material. As the cushion 305 is formed of a substantially opaque material, the second magnet 340 may not be visually recognized from the outside. When the second magnet 340 is disposed between the protective film 303 and the third portion 323, the adhesive layer 304 may be disposed on substantially the same plane as the second magnet 340 to compensate for a step difference due to a thickness (e.g., second thickness) of the second magnet 340. The adhesive layer 304 may be disposed between the protective film 303 and the first portion 321 of the support plate 320 and between the protective film 303 and the second portion 322 of the support plate 320. A first thickness of the adhesive layer 304 may correspond to a second thickness of the second magnet 340. As the first thickness corresponds to the second thickness, the step difference by the second magnet 340 may be compensated.

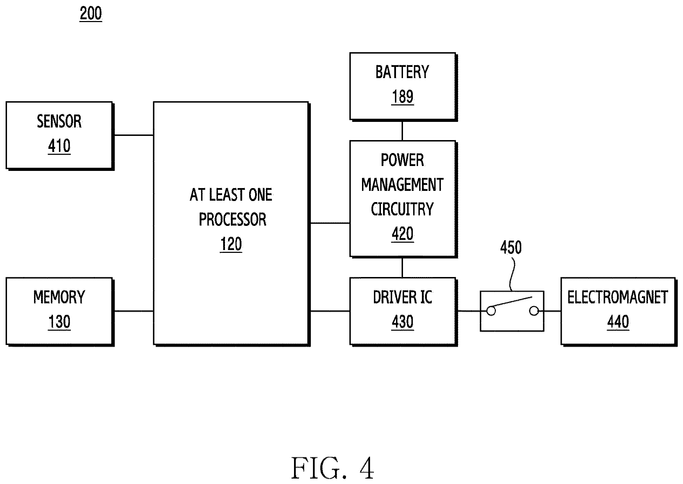

According to an embodiment, the first magnet 330 and the second magnet 340 may be disposed to overlap each other in an unfolded state of the foldable electronic device 200. In the unfolded state, an attractive force may be applied between the first magnet 330 and the second magnet 340, and the crease may be alleviated or removed by the attractive force. For example the bending portion 313 may be pulled downward (e.g., in the -z direction) by the attractive force, so that a portion where the crease occurred may be unfolded, or the crease may be reduced. According to an embodiment, at least one of the first magnet 330 and the second magnet 340 may correspond to an electromagnet (e.g., an electromagnet 440 of FIG. 4). An electromagnet may be magnetized only when a current is applied. An electromagnet may be distinguished from a permanent magnet that always forms a magnetic field. For example, when the first magnet 330 corresponds to an electromagnet, the second magnet 340 may correspond to a permanent magnet or an electromagnet. Conversely, when the second magnet 340 corresponds to an electromagnet, the first magnet 330 may correspond to a permanent magnet or an electromagnet. According to an embodiment, the electromagnet is magnetized only in the unfolded state of the foldable electronic device 200, thereby mitigating or removing the crease of the bending portion 313. A force between the first magnet 330 and the second magnet 340 for mitigating or removing the crease has been described as an attractive force, but the force may be a repulsive force. As the electromagnet is magnetized, a repulsive force may be applied between the first magnet 330 and the second magnet 340, and the crease of the bending portion 313 may be reduced, alleviated or removed by the repulsive force.

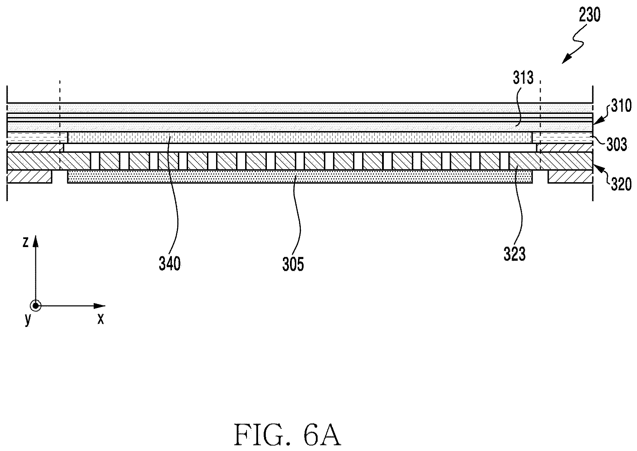

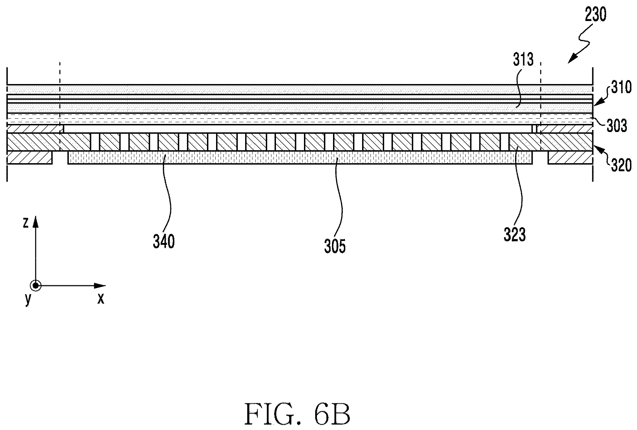

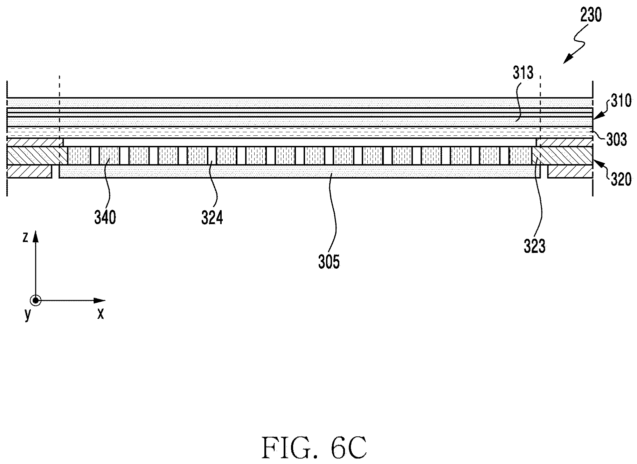

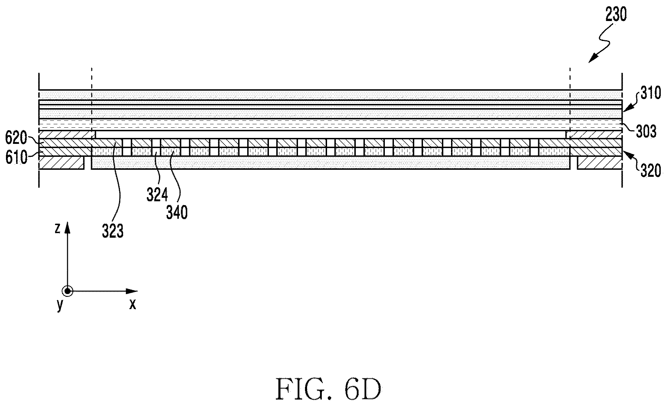

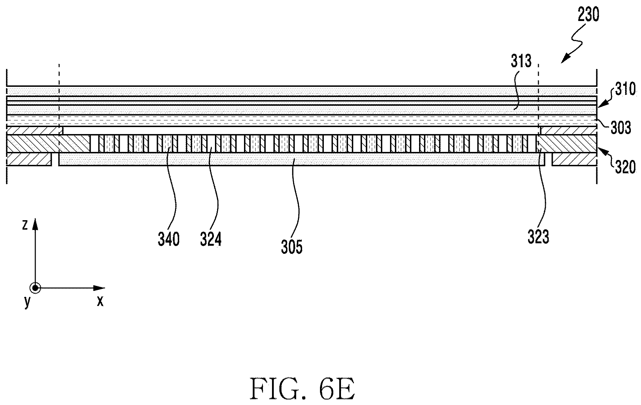

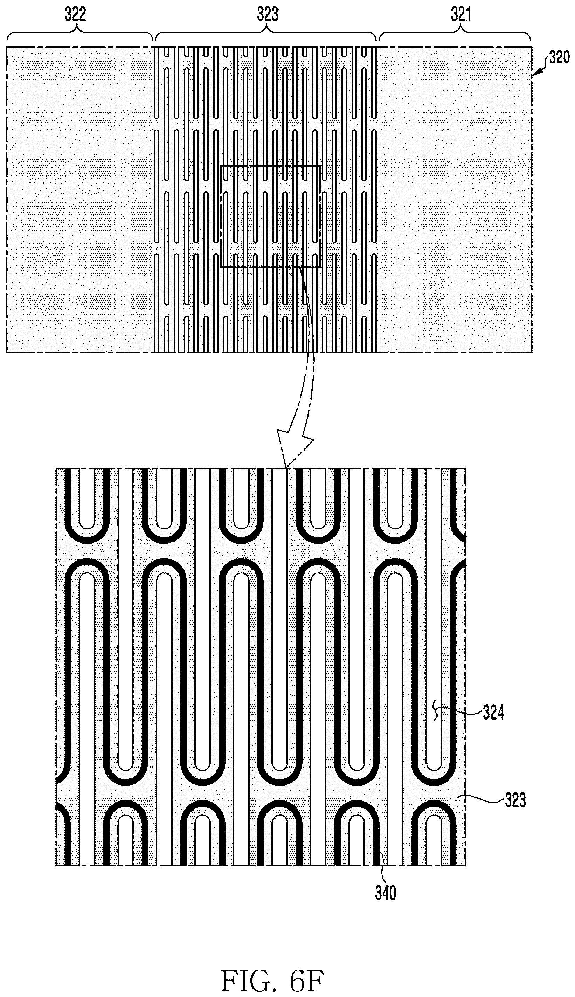

According to an embodiment, the hinge plates 252 and 253 of the hinge assembly 250 may include the first magnet 330. For example, the first magnet 330 may form a part of the hinge plate, but the disclosure is not limited thereto. Various examples of the first magnet 330 will be described later with reference to FIGS. 6A, 6B, 6C, 6D, 6E, and 6F. According to an embodiment, the hinge assembly 250 may include a support bar 255 for supporting a part of the bending portion 313. The first magnet 330 may be included within the support bar 255 as well as the hinge plates 252 and 253, or may be disposed on the support bar 255.

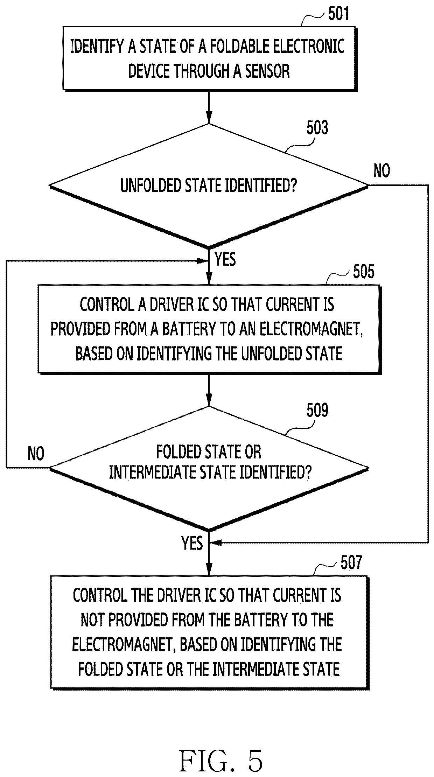

According to an embodiment, the flexible display 230 may include the second magnet 340 paired with the first magnet 330. The second magnet 340 may overlap the third portion 323 including a plurality of slits 324. The overlapping of the second magnet 340 with the third portion 323 may include a structure in which the second magnet 340 is disposed on the third portion 323, a structure in which the second magnet 340 is disposed under the third portion 323, or a structure in which the second magnet 340 is disposed within the third portion 323. Various examples of the arrangement structures of the second magnet 340 will be described later with reference to FIGS. 5A, 5B, 5C, 5D, and 5E.

According to an embodiment, the foldable electronic device 200 may be configured to supply current to the electromagnet, based on identifying the unfolded state. For example, in a case that the first magnet 330 corresponds to an electromagnet and the second magnet 340 corresponds to a permanent magnet, when current is supplied to the first magnet 330, the first magnet 330 may be magnetic by its magnetization. Attraction may occur between the magnetized first magnet 330 and the second magnet 340 corresponding to a permanent magnet. The attractive force may alleviate or remove the crease caused in the bending portion 313 by pulling the bending portion 313 flat. The foldable electronic device 200 may be configured to cease supplying current to the electromagnet based on identifying the folded state. When the current supply is stopped, the magnetism of the electromagnet disappears, so the attractive force may be removed. When the attractive force occurs even when the foldable electronic device 200 is in the folded state, damage to the flexible display 230 may be caused by the attractive force. In order to prevent or reduce such damage, the foldable electronic device 200 may cease supplying current to the electromagnet based on identifying a folded state or an intermediate state of the foldable electronic device 200.

FIG. 4 is a block diagram illustrating components of a foldable electronic device according to an embodiment.

Referring to FIG. 4, the foldable electronic device 200 according to an embodiment may include a sensor 410, a memory (e.g., the memory 130 of FIG. 1), at least one processor (e.g., the processor 120 of FIG. 1), a battery (e.g., the battery 189 of FIG. 1), power management circuitry 420, driver integrated circuitry 430, and an electromagnet 440. As described above, the electromagnet 440 may be at least one of the first magnet 330 and the second magnet 340. For example, the first magnet 330 may correspond to the electromagnet 440, the second magnet 340 may correspond to the electromagnet 440, or both the first magnet 330 and the second magnet 340 may correspond to the electromagnet 440.

According to an embodiment, the sensor 410 may be used to identify a state of the foldable electronic device 200. For example, the sensor 410 may be configured to provide data indicating angle information between the first housing part (e.g., the first housing part 210 of FIG. 3) and the second housing part (e.g., the second housing part 220 of FIG. 3) to at least one processor 120. The at least one processor 120 may be configured to identify a state (e.g., an unfolded state, a folded state, or an intermediate state) of the foldable electronic device 200, based on data received from the sensor 410. The sensor 410 may include a hall sensor, but this disclosure is not limited thereto.

Any functions or operations described in the present specification may be processed by at least one processor 120. According to an embodiment, the at least one processor 120 may include processing circuitry. The at least one processor 120 may include an application processor (AP, e.g., a central processing unit (CPU) and/or a communication processor (CP, e.g., a modem), but the disclosure is not limited thereto. The at least one processor 120 may include a graphics processing device (e.g., GPU), a neural processing unit (NPU) (e.g., artificial intelligence (AI) chip), a wireless-fidelity (Wi-Fi) chip, a Bluetooth^{®} chip, a global positioning system (GPS) chip, a near field communication (NFC) chip, a connectivity chips, a sensor controller, a touch controller, a finger-print sensor controller, display drive integrated circuitry (DDI), an audio CODEC chip, a universal serial bus (USB) controller, a camera controller, an image processing IC, a microprocessor unit (MPU), a system-on-chip (SoC), an integrated circuit (IC), or a circuit similar thereto.

According to an embodiment, when the sensor 410 transmits data indicating angle information between the first housing part 210 and the second housing part 220 to the at least one processor 120, at least one processor 120 may be configured to identify a state of the foldable electronic device 200 based on the data. For example, at least one processor 120 may be configured to identify the unfolded state of the foldable electronic device 200, when the angle between the first housing part 210 and the second housing part 220 identified from the data is within a first angle range (e.g., about 175 degrees to about 185 degrees). For example, the at least one processor 120 may be configured to identify the intermediate state of the foldable electronic device 200, when the angle between the first housing part 210 and the second housing part 220 identified from the data is within a second angle range (e.g., about 5 degrees to about 175 degrees). For example, the at least one processor 120 may be configured to identify the folded state of the foldable electronic device 200, when the angle between the first housing part 210 and the second housing part 220 identified from the data is included within a third angle range (e.g., about 0° to about 5°). The numerical values of the above-described angle range are of examples and embodiments of the disclosure are not limited thereto.

According to an embodiment, the memory 130 may include one or more storage media that store instructions. Each flowchart to be described later may be performed by executing instructions executable by a computer by the at least one processor 120.

According to an embodiment, the at least one processor 120 may be configured to control the operation of foldable electronic device 200. Any functions or operations described in the disclosure may be processed by one processor or a combination of processors. A processor or a combination of processors is circuitry that performs processing, and may include an application processor (AP, e.g., central processing unit (CPU)), a communication processor (CP, e.g., modem), a graphics processing unit (e.g., GPU), a neural network processing unit (NPU, e.g., artificial intelligence (AI) chip), a wireless-fidelity (Wi-Fi) chip, a Bluetooth^{™} chip, a global positioning system (GPS) chip, a near field communication (NFC) chip, connectivity chips, a sensor controller, a touch controller, a finger-print sensor controller, display drive integrated circuitry (DDI), an audio CODEC chip, a universal serial bus (USB) controller, a camera controller, an image processing IC, a microprocessor unit (MPU), a system-on-chip (SoC) IC, or circuitry similar to thereto.

According to an embodiment, the battery 189 may be configured to provide power for operating electronic components of the foldable electronic device 200. For example, the battery 189 may include a rechargeable secondary battery.

According to an embodiment, the power management integrated circuitry 420 may be configured to control charging and discharging of the battery 189. For example, the power management circuitry 420 may be configured to charge the battery 189, using power supplied from an external power source. The power management circuitry 420 may select a charging scheme (e.g., normal charging or quick charging) based on a type of external power source (e.g., power adapter, USB or wireless charging), a magnitude of power supplied from the external power source (e.g., about 20 watts or more), or at least some of the properties of the battery 189, and charge the battery 189 using the selected charging scheme. For example, the external power source may be connected to the foldable electronic device 200 in a wired manner via a connecting terminal (e.g., the connecting terminal of FIG. 1), or may be connected wirelessly through an antenna module. The power management circuitry 420 may generate a plurality of powers having different voltage or current levels by adjusting a voltage or current level of the power supplied from the battery 189. The power management circuitry 420 may adjust the power of the battery 189 to a voltage or current level suitable for each of some components of the components included in the foldable electronic device 200. The power management circuitry 420 may measure usage state information about the battery 189 (e.g., capacity, number of charging/discharging, voltage, or temperature of the battery 189).

According to an embodiment, the driver integrated circuitry 430 may be electrically connected to the electromagnet 440. The driver integrated circuitry 430 may be configured to supply a current provided from the battery 189 to the electromagnet 440 through the power management circuitry 420. For example, switch circuitry 450 may be disposed between the driver integrated circuitry 430 and the electromagnet 440, and whether to supply a current to the electromagnet 440 may be determined based on a state of the switch circuitry 450. For example, while the switch circuitry 450 is closed, the driver integrated circuitry 430 and the electromagnet 440 are electrically connected, so that a current may be provided to the electromagnet 440 through the driver integrated circuitry 430. For example, while the switch circuitry 450 is open, the driver integrated circuitry 430 and the electromagnet 440 are electrically disconnected, so that a current may not be provided to the electromagnet 440.

According to an embodiment, at least one processor 120 may be configured to identify the state of the foldable electronic device 200 through the sensor 410 and control whether or not to supply current from the battery 189 to the electromagnet 440 based on the identified state of the foldable electronic device 200. For example, the at least one processor 120 may be configured to control whether or not to supply current to the electromagnet 440 by controlling the driver integrated circuitry 430.

Hereinafter, an operation of the at least one processor 120 controlling the supply of current to the electromagnet 440 will be described.

FIG. 5 is a flowchart illustrating an operation of controlling supplying of current to an electromagnet by a foldable electronic device according to an embodiment.

The operations of FIG. 5 may be referred to as operations caused by the foldable electronic device (e.g., the foldable electronic device 200 of FIG. 3), when the instructions stored in the memory (e.g., the memory 130 of FIG. 4) are executed by at least one processor (e.g., the at least one processor 120 of FIG. 4).

Referring to FIG. 5, in operation 501, the instructions may cause the foldable electronic device 200 to identify the state of foldable electronic device 200 through a sensor (e.g., the sensor 410 of FIG. 4), when executed individually or collectively by the at least one processor 120.

According to an embodiment, the sensor 410 may be configured to provide data indicating the state of the foldable electronic device 200 to the at least one processor 120. For example, the at least one processor 120 may provide data indicating angle information between the first housing part (e.g., the first housing part 210 of FIG. 3) and the second housing part (e.g., the second housing part 220 of FIG. 3) to the at least one processor 120. The at least one processor 120 may be configured to receive the data from the sensor 410 and identify the state of the foldable electronic device 200 based on the data. For example, the at least one processor 120 may be configured to identify the unfolded state of the foldable electronic device 200, when the angle between the first housing part 210 and the second housing part 220 identified from the data is included within the first angle range (e.g., about 175 degrees to about 185 degrees). For example, the at least one processor 120 may be configured to identify the intermediate state of the foldable electronic device 200, when the angle between the first housing part 210 and the second housing part 220 identified from the data is included within the second angle range (e.g., about 5 degrees to about 175 degrees). For example, the at least one processor 120 may be configured to identify the folded state of the foldable electronic device 200, when the angle between the first housing part 210 and the second housing part 220 identified from the data is included within the third angle range (e.g., about 0 degrees to about 5 degrees).

In operation 503, the instructions, when executed individually or collectively by the at least one processor 120, may cause the foldable electronic device 200 to determine whether the unfolded state of the foldable electronic device 200 has been identified.

According to an embodiment, the at least one processor 120 may be configured to determine whether the unfolded state of the foldable electronic device 200 has been identified in order to determine whether a condition in which current is supplied to the electromagnet (e.g., the electromagnet 440 of FIG. 4) is satisfied. Operation 505 may be performed when the identified state of the foldable electronic device 200 is in the unfolded state. Operation 507 may be performed when the identified state of the foldable electronic device 200 is not in the unfolded state. Here, when the state of the foldable electronic device 200 is not in the unfolded state, it may be referred to as a circumstance in which it is identified either the folded state of the foldable electronic device 200 or the intermediate state of the foldable electronic device 200.

In operation 505, the instructions may, when executed individually or collectively by at least one processor 120, cause the foldable electronic device 200 to control driver integrated circuitry (e.g., the driver integrated circuitry 430 of FIG. 4) so that a current is provided from the battery (e.g., battery 189 of FIG. 4) to the electromagnet 440, based on identifying the unfolded state of the foldable electronic device 200.

According to an embodiment, the at least one processor 120 may magnetize the electromagnet 440 based on identifying the unfolded state of the foldable electronic device 200. The at least one processor 120 may be configured to control the driver integrated circuitry 430 to supply a current from the battery 189 to the electromagnet 440 for magnetization of the electromagnet 440. For example, the driver integrated circuitry 430 may be controlled by the at least one processor 120 to supply the current supplied from the battery 189 to the electromagnet 440 through the power management circuitry 420. For example, the driver integrated circuitry 430 may control switch circuitry (e.g., the switch circuitry 450 of FIG. 4) to electrically connect the driver integrated circuitry 430 and the electromagnet 440, and the current may be provided from the battery 189 to the electromagnet 440 through the power management circuitry 420, the driver integrated circuitry 430, and the switch circuitry 450.

According to an embodiment, as current is supplied to the electromagnet 440, the electromagnet 440 may be magnetized. When the electromagnet 440 is magnetized, an attractive force may occur between the first magnet (e.g., the first magnet 330 in FIG. 3) and the second magnet (e.g., the second magnet 340 in FIG. 3). For example, when the first magnet 330 corresponds to the electromagnet 440 and the second magnet 340 corresponds to a permanent magnet, the attractive force between the first magnet 330 and the second magnet 340 may be caused as the first magnet 330, which is the electromagnet 440, is magnetized. In the unfolded state of the foldable electronic device 200, the bending portion 313 may be substantially flat. The attractive force may pull on the bending portion (e.g., the bending portion 313 in FIG. 3) of the substantially flat display panel (e.g., the display panel 310 in FIG. 3) to mitigate or eliminate the crease.

In operation 507, the instructions may, when executed individually or collectively by at least one processor 120, cause the foldable electronic device 200 to control the driver integrated circuitry 430 so that current is not provided from the battery 189 to the electromagnet 440, based on identifying the folded state or the intermediate state of the foldable electronic device 200.

According to an embodiment, the at least one processor 120 may not magnetize the electromagnet 440 based on identifying the folded state or the intermediate state of the foldable electronic device 200, which is different from the unfolded state of the foldable electronic device 200. The at least one processor 120 may be configured to control the driver integrated circuitry 430 so that current is not provided from the battery 189 to the electromagnet 440 (or to refrain from providing current from the battery 189 to the electromagnet 440), in order not to magnetize the electromagnet 440. For example, the driver integrated circuitry 430 may be controlled by the at least one processor 120 not to provide current provided from the battery 189 through the power management circuitry 420 to the electromagnet 440. For example, the driver integrated circuitry 430 may control the switch circuitry 450 to electrically disconnect the driver integrated circuitry 430 and the electromagnet 440. As the driver integrated circuitry 430 and the electromagnet 440 are electrically disconnected, the current may not be provided from the battery 189 to the electromagnet 440 and thus the electromagnet 440 may not be magnetized.

According to an embodiment, as no current is supplied to the electromagnet 440, the electromagnet 440 cannot be magnetized. If the electromagnet 440 is not magnetized, the attractive force between the first magnet 330 and the second magnet 340 may not be caused. For example, when the first magnet 330 corresponds to the electromagnet 440 and the second magnet 340 corresponds to a permanent magnet, the first magnet 330 which is the electromagnet 440 is not magnetized, and thus the attractive force between the first magnet 330 and the second magnet 340 may not be caused. The bending portion 313 may be at least partially bent in the folded state of the foldable electronic device 200 or the intermediate state of the foldable electronic device 200. When the attractive force is caused while the bending portion 313 is at least partially bent, damage to the flexible display (e.g., the flexible display 230 of FIG. 3) may be caused. In order to prevent or reduce damage to the flexible display 230, the foldable electronic device 200 may not provide current to the electromagnet 440 in the folded state of the foldable electronic device 200 or the intermediate state of the foldable electronic device 200.

Following the operation 505, operation 509 may be performed. In operation 509, when the instructions are individually or collectively executed by the at least one processor 120, the foldable electronic device 200 may cause the foldable electronic device 200 to determine whether the folded state of the foldable electronic device 200 or the intermediate state of the foldable electronic device 200 has been identified. For example, operation 507 may be performed when the identified state of the foldable electronic device 200 is in the folded state or the intermediate state. When the identified state of the foldable electronic device 200 is not in the folded state or the intermediate state, the operation 505 may be performed again. Here, whether the folded state of the foldable electronic device 200 or the intermediate state of the foldable electronic device 200 has been identified may be referred to as a circumstance in which the unfolded state of the foldable electronic device 200 is not identified.

According to an embodiment, when the state of the foldable electronic device 200 is changed from the unfolded state to the folded state or the intermediate state, the operation 507 may be performed. In operation 507, the at least one processor 120 may be configured to control the driver integrated circuitry 430 so that no current is provided from the battery 189 to the electromagnet 440. Since the state of the foldable electronic device 200 has changed from the unfolded state to the folded state or the intermediate state, the bending portion 313 of the display panel 310 may be at least partially bent. In this case, the at least one processor 120 may be configured to release magnetization of the electromagnet 440 in order to prevent or reduce damage to the flexible display 230.

According to an embodiment, the operation 505 may be performed when the state of the foldable electronic device 200 is maintained in the unfolded state. In operation 505, the at least one processor 120 may be configured to control the driver integrated circuitry 430 to provide current from the battery 189 to the electromagnet 440. Since the state of the foldable electronic device 200 is maintained in the unfolded state, the bending portion 313 of the display panel 310 may be substantially flat. In such a case, the at least one processor 120 may be configured to maintain the magnetization of the electromagnet 440 in order to reduce and/or remove the crease of the bending portion 313.

As described above, the foldable electronic device 200 may be configured to cause an attractive force between the first magnet 330 and the second magnet 340 based on the unfolded state of the foldable electronic device 200. When the foldable electronic device 200 is in the unfolded state, it may cause the attractive force between the first magnet 330 and the second magnet 340. In the unfolded state of the foldable electronic device 200, the bending portion 313 of the display panel 310 may not be bent and may be substantially flat. Thus, the attractive force between the first magnet 330 and the second magnet 340 may cause the substantially flat bending portion 313 to be pulled, thereby removing the crease. According to an embodiment, by mitigating and/or removing the crease in the bending portion 313, enhanced quality of visual information displayed on the flexible display 230 may be obtained.

FIGS. 6A, 6B, 6C, 6D, and 6E each illustrate examples of arrangement structures of a second magnet according to various embodiments. FIG. 6F is a plan view of a support plate illustrated in FIG. 6E.

The second magnet 340 shown in FIG. 3 may be disposed between the bending portion 313 of the display panel 310 and the third portion 323 of the support plate 320, as described above, but embodiments of the disclosure are not limited thereto.

Referring to FIG. 6A, the second magnet 340 may be disposed in a protective film 303 disposed under the display panel 310 (e.g., -z direction). The second magnet 340 may be disposed in a portion of the entire area of the protective film 303, which is in contact with the bending portion 313 of the display panel 310. Since the portion of the protective film 303 in contact with the bending portion 313 overlaps the third portion 323 of the support plate 320, the second magnet 340 may overlap the third portion 323. For example, by forming the portion of the protective film 303 in contact with the bending portion 313 with magnetic materials, the second magnet 340 may be disposed in the protective film 303.

Referring to FIG. 6B, the second magnet 340 may be disposed under the third portion 323 of the support plate 320. For example, the second magnet 340 may form at least a part of the cushion 305 for relieving an impact applied to the bending portion 313 under the third portion 323 of the support plate 320. In this case, the second magnet 340 may include a material having elasticity to alleviate the impact applied to the bending portion 313 of the display panel 310.

Referring to FIG. 6C, the second magnet 340 may be disposed in the third portion 323 of the support plate 320. For example, the second magnet 340 may form at least a portion of the third portion 323 including a plurality of slits 324. The plurality of slits 324 may be formed by perforating a portion of the third portion 323 by laser processing. For example, by forming the third portion 323 with a magnetic material, the support plate 320 including the second magnet 340 may be manufactured. In order to form a plurality of slits 324, laser processing may be used to perforate a portion of the third portion 323. The plurality of slits 324 may penetrate the second magnet 340. The second magnet 340 may form at least a portion of the area of the third portion 323 excluding the plurality of slits 324. Since the third portion 323 is bent together with the bending portion 313 when the bending portion 313 of the display panel 310 is bent, the second magnet 340 may have flexibility so that it may be bent together with the bending portion 313.

Referring to FIG. 6D, the support plate 320 may include a first layer 610 and a second layer 620 stacked on each other. For example, the second layer 620 may be stacked above the first layer 610 (e.g., +z direction). The second magnet 340 may be disposed within the first layer 610. For example, the second magnet 340 may form at least a part of the first layer 610. For example, the support plate 320 may be manufactured by stacking the first layer 610 and the second layer 620 in a state before the plurality of slits 324 are formed. After the first layer 610 and the second layer 620 are stacked, the plurality of slits 324 may be formed by perforating a portion of the third portion 323 using the laser processing. The plurality of slits 324 may pass through the first layer 610 and the second layer 620.

Referring to FIG. 6E, the second magnet 340 may be disposed within the third portion 323. For example, the third portion 323 may include openings forming a plurality of slits 324 and portions filled with a magnetic material forming the second magnet 340. Referring to FIG. 6F, the portions filled with the magnetic material may be disposed to circumvent the plurality of slits 324. In the embodiment shown in FIGS. 6E and 6F, a portion of the third portion 323 may be the second magnet 340 disposed to circumvent the plurality of slits 324, and another portion of the third portion 323 may not include the magnetic material. In addition to the foregoing, various embodiments of the arrangement structure of the second magnet 340 may be envisaged.

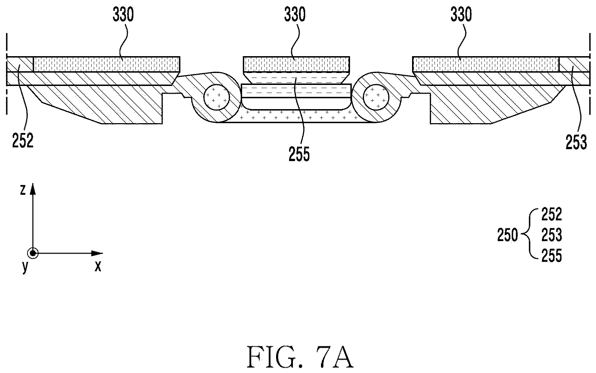

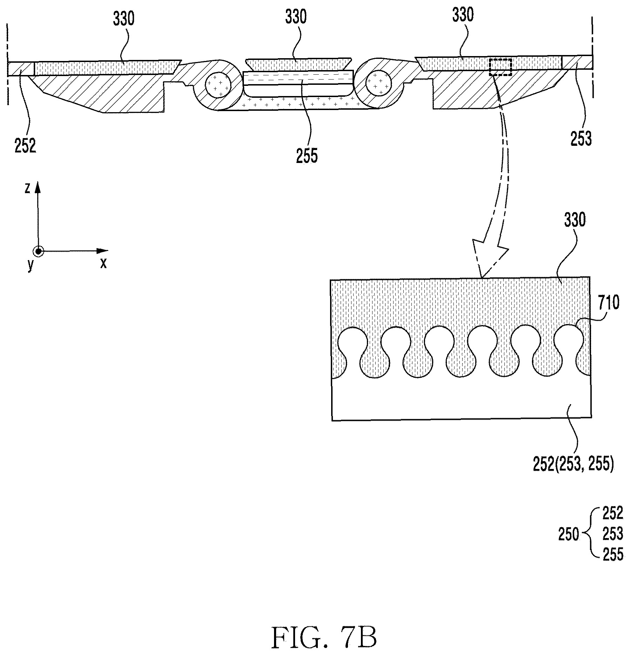

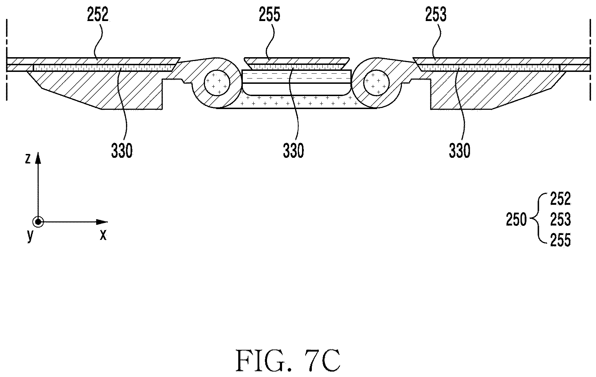

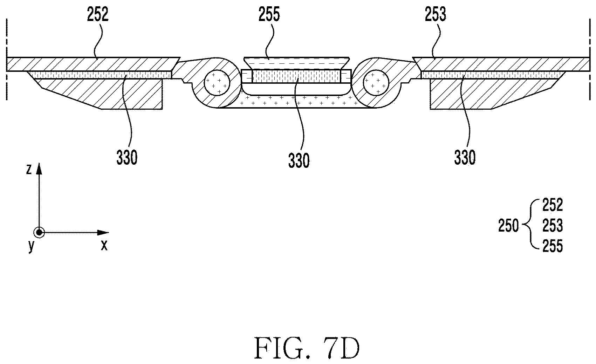

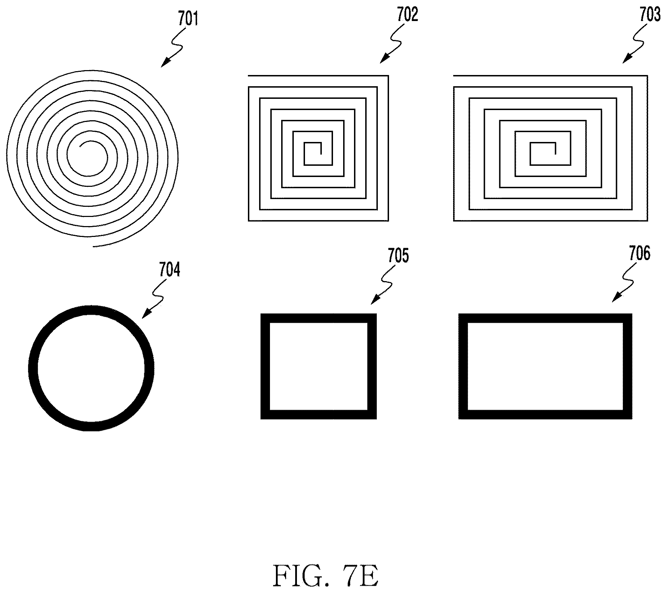

FIGS. 7A, 7B, 7C, and 7D each illustrate examples of arrangement structures of a first magnet according to various embodiments. FIG. 7E illustrates various shapes of the pattern of the second magnet illustrated in FIG. 7D.

According to an embodiment, the hinge assembly 250 may include a support bar 255 disposed between the hinge plates 252 and 253. For example, the support bar 255 may be disposed between the first hinge plate 252 and the second hinge plate 253. The support bar 255 disposed between the first hinge plate 252 and the second hinge plate 253 may be configured to support a part of the bending portion (e.g., the bending portion 313 of FIG. 3) of the display panel (e.g., the display panel 310 of FIG. 3). As described above, the hinge plates 252 and 253 and the support bar 255 may include the first magnet 330.

Referring to FIG. 7A, the first magnet 330 may be disposed on the hinge plates 252 and 253 and/or the support bar 255. For example, the first magnet 330 may be a magnetic film or sheet. The first magnet 330 may be formed by attaching the magnetic film or sheet onto an upper surface of each of the hinge plates 252 and 253 and/or an upper surface of the support bar 255.

Referring to FIG. 7B, the first magnet 330 may be included within the hinge plates 252 and 253 and/or the support bar 255 in a patterned form. For example, when manufacturing the hinge plates 252 and 253 and/or the support bar 255, a portion of each of the hinge plates 252 and 253 and/or a portion of the support bar 255 may be magnetized to form the first magnet 330. For example, a groove may be formed by removing a portion of the upper surface of the hinge plates 252 and 253 and/or the upper surface of the support bar 255, and the groove may be filled up with a magnetic material, thereby forming the first magnet 330. For example, the first magnet 330 may be formed by bonding onto the upper surface of the hinge plates 252 and 253 and/or the upper surface of the support bar 255. The first magnet 330 may be bonded by means of a bonding process such as e.g., thermal bonding or bonding contact. In order to secure a bonding force with respect to the upper surface of the hinge plates 252 and 253 and/or the upper surface of the support bar 255, a bonding surface of the first magnet 330 may include a concavo-convex portion 710. Such a concavo-convex portion 710 can expand an area of the bonding surface to improve the bonding force.

Referring to FIG. 7C, the first magnet 330 may be formed on bottom surfaces of the hinge plates 252 and 253 and/or a bottom surface of the support bar 255. For example, a plate-shaped first magnet 330 including a magnetic material may be attached to the bottom surfaces of the hinge plates 252 and 253 and/or the bottom surface of the support bar 255.

Referring to FIG. 7D, the first magnet 330 may be disposed on the bottom surfaces of the hinge plates 252 and 253 and/or the bottom surface of the support bar 255. For example, the first magnet 330 may be patterned on the bottom surfaces of the hinge plates 252 and 253 and/or the bottom surface of the support bar 255. The first magnet 330 may have a certain shape of pattern. The first magnet 330 may be implemented in various shapes depending on the area or shape of the hinge plates 252 and 253 and/or the support bar 255.

Referring to FIG. 7E, various patterns of the first magnet 330 are illustrated. For example, the first magnet 330 may have a first shape 701 extending in a circle along concentric circles. For example, the first magnet 330 may have a second shape 702 extending linearly along squares. For example, the first magnet 330 may have a third shape 703 extending linearly along rectangles. For example, the first magnet 330 may have a fourth shape 704 of a circular ring shape. For example, the first magnet 330 may have a fifth shape 705 of a square ring shape having rounded corners. For example, the first magnet 330 may have a sixth shape 706 of a rectangular ring shape having rounded corners. In addition thereto, various embodiments of the arrangement structure and shape of the first magnet 330 may be envisaged.

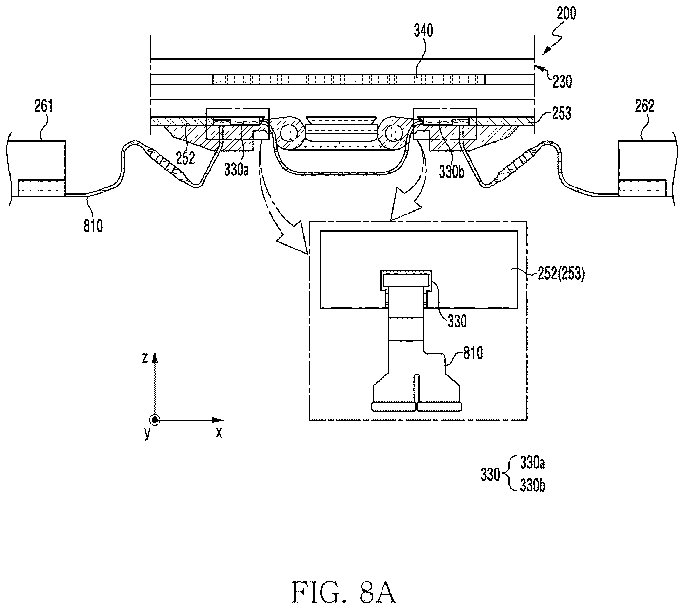

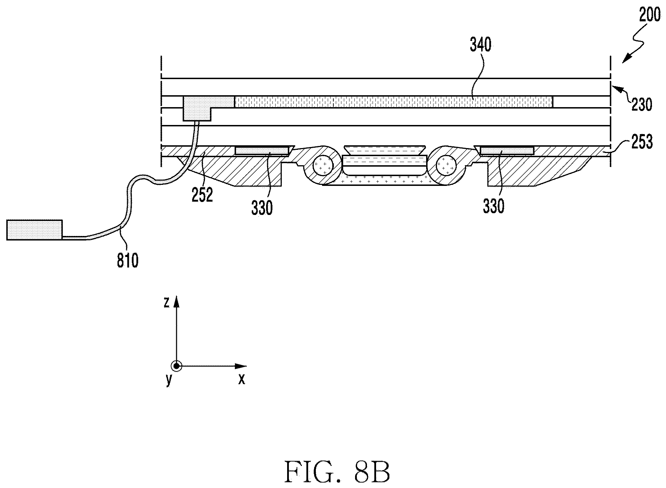

FIGS. 8A and 8B illustrate a foldable electronic device according to an embodiment including a flexible printed circuit board connected to an electromagnet.

Referring to FIG. 8A, the foldable electronic device 200 according to an embodiment may include a flexible printed circuit board 810. The flexible printed circuit board 810 may have flexibility. The flexible printed circuit board 810 may include a conductive layer. The flexible printed circuit board 810 may be configured to provide electrical connection for electronic components, using wirings formed in the conductive layer. For example, the flexible printed circuit board 810 may be connected to the first printed circuit board 261 and the second printed circuit board 262.

According to an embodiment, the flexible printed circuit board 810 may be configured to electrically connect a battery (e.g., the battery 189 of FIG. 4) and an electromagnet (e.g., the electromagnet 440 of FIG. 4). At least one of the first magnet 330 or the second magnet 340 may correspond to the electromagnet. For example, connectors of the flexible printed circuit board 810 may be electrically connected to the battery and the electromagnet. Current provided from the battery to the electromagnet may be supplied through the flexible printed circuit board 810.

FIG. 8A illustrates an embodiment in which the first magnet 330 included in the hinge plates 252 and 253 corresponds to an electromagnet, and the second magnet 340 included in the flexible display 230 corresponds to a permanent magnet. According to an embodiment, the flexible printed circuit board 810 may be configured to electrically connect the battery and the first magnet 330. The flexible printed circuit board 810 may be connected to each of the battery and the first magnet 330. When the foldable electronic device 200 is in the unfolded state, current may be provided from the battery to the electromagnet (e.g., the first magnet 330) in order to magnetize the electromagnet. The current supplied from the battery to the electromagnet may be provided to the electromagnet through the flexible printed circuit board 810.

According to an embodiment, the first magnet 330 may include a magnet 330a included in the first hinge plate 252 and a magnet 330b included in the second hinge plate 253. When the first magnet 330 corresponds to an electromagnet, the flexible printed circuit board 810 may be connected to both the magnet 330a included in the first hinge plate 252 and the magnet 330b included in the second hinge plate 253. Since the flexible printed circuit board 810 has flexibility, it may be disposed to cross between the first hinge plate 252 and the second hinge plate 253. The flexible printed circuit board 810 may be at least partially bent, thereby being connected to both the magnet 330a included in the first hinge plate 252 and the magnet 330b included in the second hinge plate 253. For example, the flexible printed circuit board 810 may include connectors coupled to the magnet 330a and the magnet 330b. These connectors may be coupled to the first magnet 330 through grooves formed on lower surfaces of the hinge plates 252 and 253. For example, the connectors may come into contact with the first magnet 330 via an anisotropic conductive film (ACF).

According to an embodiment, when the foldable electronic device 200 is in the unfolded state, current may be suppled from the flexible printed circuit board 810 to the electromagnet (e.g., the first magnet 330). By providing the current, an attractive force (or repulsive force) may be caused between the first magnet 330 corresponding to the electromagnet and the second magnet 340. The attractive force (or repulsive force) may be alleviated and/or removed by pulling the bending portion 313 of the display panel 310 downward (e.g., -z direction)

FIG. 8B illustrates an embodiment in which the first magnet 330 included in the hinge plates 252 and 253 corresponds to a permanent magnet, and the second magnet 340 included in the flexible display 230 corresponds to an electromagnet. According to an embodiment, the flexible printed circuit board 810 may be configured to electrically connect the battery and the second magnet 340. The flexible printed circuit board 810 may be connected to each of the battery and the second magnet 340. When the foldable electronic device 200 is in the unfolded state, current may be provided from the battery to the electromagnet (e.g., the second magnet 340) to magnetize the electromagnet. Current supplied from the battery to the electromagnet may be provided to the electromagnet through the flexible printed circuit board 810. The flexible printed circuit board 810 may be at least partially bent to extend from the battery toward the second magnet 340.

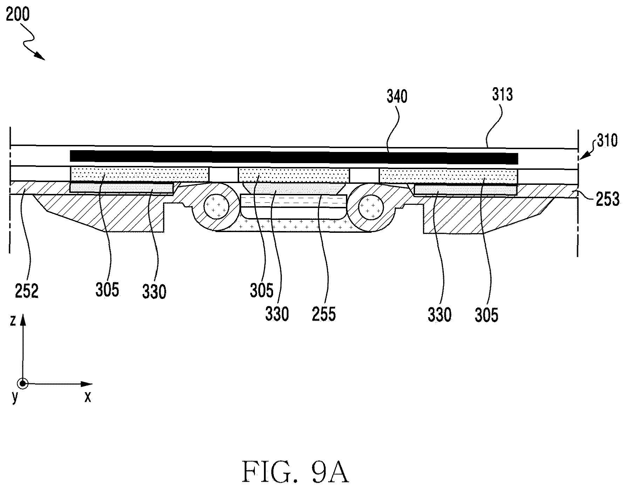

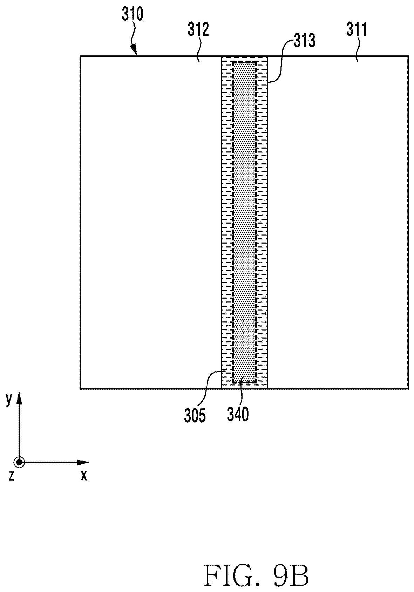

FIG. 9A illustrates a foldable electronic device including a cushion according to an embodiment. FIG. 9B illustrates a rear surface of a flexible display of a foldable electronic device including a cushion according to an embodiment.

Referring to FIG. 9A, the foldable electronic device 200 according to an embodiment may include a cushion 305. The cushion 305 may be disposed under the third portion 323 of the support plate 320 to alleviate an impact applied to the bending portion 313. Since the cushion 305 is disposed under the third portion 323 of the support plate 320, the cushion 305 may be disposed above the hinge plates 252 and 253 and the support bar 255 (e.g., +z direction). The cushion 305 may be configured to absorb an impact to reduce damage to the bending portion 313. The cushion 305 may be disposed between the rigid hinge plates 252 and 253 and the support bar 255 and the flexible bending portion 313 to reduce damage to the bending portion 313. For example, the cushion 305 may include an elastic material (e.g., rubber, polyurethane, pressure sensitive adhesive (PSA), etc.). According to an embodiment, the cushion 305 may be disposed to overlap the first magnet 330. According to an embodiment, the cushion 305 may be disposed on the first magnet 330 to reduce separation of the magnetic material forming the first magnet 330.

Referring to FIG. 9B, the cushion 305 may be disposed to overlap the second magnet 340. As described above, since the cushion 305 also overlaps the first magnet 330, the cushion 305 may be disposed to overlap both of the first magnet 330 and the second magnet 340. According to an embodiment, the magnetic material separated from the first magnet 330 or the second magnet 340 may not reach a rear surface of the display panel 310, due to the cushion 305. For example, when a magnetic material is in contact with the rear surface of the display panel 310, damage to the display panel 310 may be caused by a frictional force between the display panel 310 and the magnetic material. The cushion 305 may be disposed under the third portion 323 to prevent the magnetic material from reaching the display panel 310.

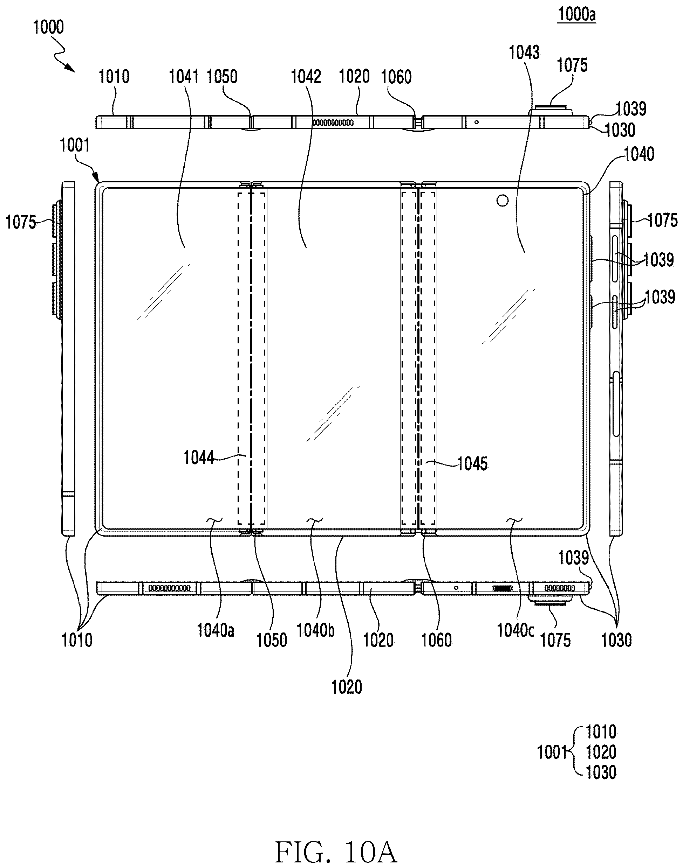

As described above, the foldable electronic device (e.g., the foldable electronic device 200 of FIG. 3) may alleviate or remove the crease of the bending portion (e.g., the bending portion 313 of FIG. 3) based on the magnetic force applied in the unfolded state. The above-described foldable electronic device 200 has been described to have a foldable housing (e.g., the foldable housing 201 of FIG. 3) including the first housing part (e.g., the first housing part 210 of FIG. 3) and the second housing part (e.g., the second housing part 220 of FIG. 3), but embodiments of the disclosure are not limited thereto. The foldable housing (e.g., a foldable housing 1001 of FIG. 10A) of the foldable electronic device (e.g., a foldable electronic device 1000 of FIG. 10A) to be described later may further include a third housing part (e.g., the third housing part 1030 of FIG. 10A) in addition to the first housing part (e.g., the first housing part 1010 of FIG. 10A) and the second housing part 1020 of FIG. 10A).

Hereinafter, a foldable electronic device 1000 including a foldable housing 1001 including a first housing part 1010, a second housing part 1020, and a third housing part 1030 will be described. The foldable electronic device 1000 may be referred to as an electronic device.

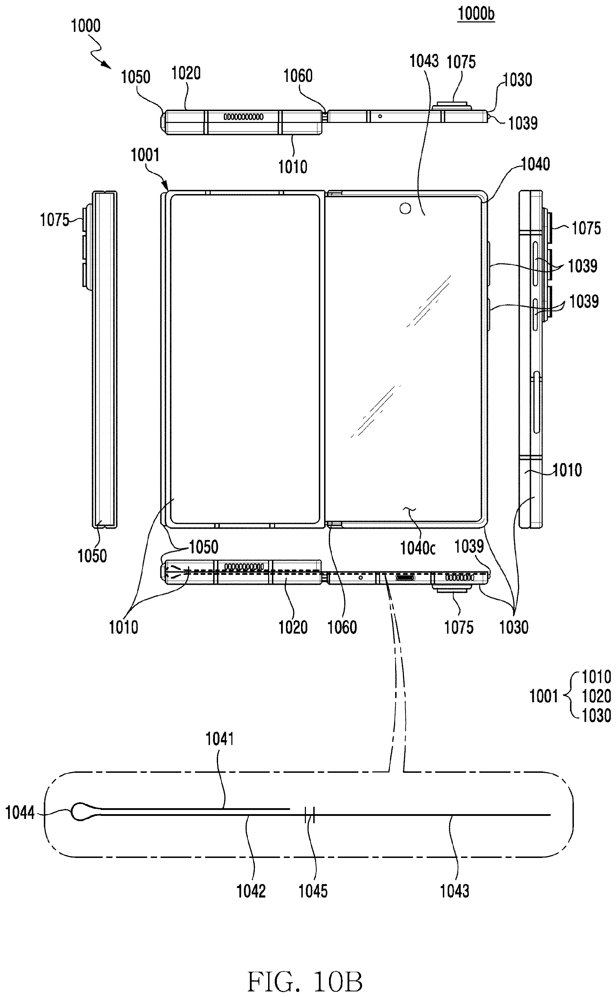

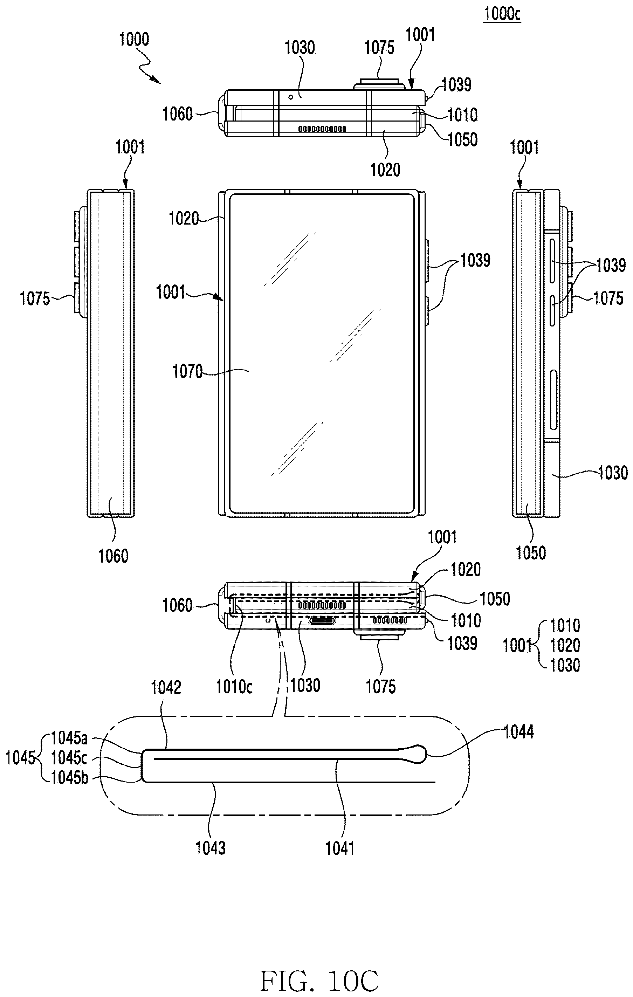

FIG. 10A illustrates an example of a first state of an electronic device. FIG. 10B illustrates an example of a second state of an electronic device. FIG. 10C illustrates an example of a third state of an electronic device.

Referring to FIGS. 10A, 10B, and 10C, the electronic device 1000 (e.g., the electronic device 101 of FIG. 1) may include a foldable housing 1001, a flexible display 1040, a first hinge assembly 1050, a second hinge assembly 1060, and a display 1070. The foldable housing 1001 may include the first housing part 1010, the second housing part 1020, and the third housing part 1030.

The first housing part 1010 may be rotatably coupled to the second housing part 1020 by a first hinge assembly 1050. The second housing part 1020 and the first housing part 1010 may be rotated with respect to the first hinge assembly 1050. While the first housing part 1010 is rotated with respect to the first hinge assembly 1050, the second housing part 1020 may also be rotated with respect to the first hinge assembly 1050. For example, when the second housing part 1020 and the first housing part 1010 are rotated with respect to the first hinge assembly 1050, angular displacement of the second housing part 1020 may be substantially the same as angular displacement of the first housing part 1010.

The third housing part 1030 may be rotatably coupled to the second housing part 1020 by a second hinge assembly 1060. The second housing part 1020 and the third housing part 1030 may be rotated with respect to the second hinge assembly 1060. While the second housing part 1020 is rotated with respect to the second hinge assembly 1060, the third housing part 1030 may also be rotated with respect to the second hinge assembly 1060. For example, when the second housing part 1020 and the third housing part 1030 are rotated with respect to the second hinge assembly 1060, angular displacement (or angle change) of the second housing part 1020 may be substantially the same as angular displacement of the third housing part 1030.

The first hinge assembly 1050 and the second hinge assembly 1060 may change the state of the electronic device. The first hinge assembly 1050 and the second hinge assembly 1060 may provide (or enable) a first state 1000a of the electronic device 1000 (or the first state 1000a of the foldable housing 1001). The first state 1000a of the electronic device 1000 (or the first state 1000a of the foldable housing 1001) may be described as an unfolded state (or unfolded state) of the electronic device 1000 (or the foldable housing 1001). In the first state 1000a, a front surface of the first housing part 1010, a front surface of the second housing part 1020, and a front surface of the third housing part 1030 may define the front surface of the electronic device 1000. In the first state 1000a, the front surface of the first housing part 1010, the front surface of the second housing part 1020, and the front surface of the third housing part 1030 may face the same direction. In the first state 1000a, the electronic device 1000 may provide a large display area of the flexible display 1040 to a user.

The first hinge assembly 1050 and the second hinge assembly 1060 may provide a second state 1000b of the electronic device 1000. The second state 1000b of the electronic device 1000 may be described as a state in which the electronic device 1000 is partially folded and partially unfolded (or a single-folded state or a half-folded state). For example, in the second state 1000b, the front surface of the second housing part 1020 and the front surface of the third housing part 1030 may face the same direction, and the front surface of the first housing part 1010 and the front surface of the second housing part 1020 may face opposite directions. For example, in the second state 1000b, the first housing part 1010 and the second housing part 1020 may be folded, and the second housing part 1020 and the third housing part 1030 may be unfolded. In the second state 1000b, the electronic device 1000 may provide visual information through a portion (e.g., a third display area 1040c) of the flexible display 1040.

The electronic device 1000 may change from the first state 1000a to the third state 1000c via the second state 1000b. The electronic device 1000 may change from the first state 1000a in an unfolded state to the second state 1000b in a partially unfolded state. For example, the electronic device 1000 may change from the first state 1000a in which the first housing part 1010, the second housing part 1020, and the third housing part 1030 face the same direction, to the second state 1000b in which the front surface of the first housing part 1010 faces the front surface of the second housing part 1020. The electronic device 1000 may change from the second state 1000b in a partially unfolded state to the third state 1000c in a folded state. For example, when changing from the second state 1000b to the third state 1000c, the folded first housing part 1010 and second housing part 1020 may be disposed on the third housing part 1030.

The first hinge assembly 1050 and the second hinge assembly 1060 may provide the third state 1000c of the electronic device 1000 (or the third state 1000c of the foldable housing 1001). The third state 1000c of the electronic device 1000 (or the third state 1000c of the foldable housing 1001) may be described as a folded state (or a folded state or a multi-folded state) of the electronic device 1000 (or the foldable housing 1001). In the third state 1000c, the front surface of the first housing part 1010 and the front surface of the second housing part 1020 may face opposite directions, and the front surface of the second housing part 1020 and the front surface of the third housing part 1030 may face opposite directions. In the third state 1000c, the front surface of the first housing part 1010 and the front surface of the third housing part 1030 may face the same direction. For example, in the third state 1000c, the front surface of the second housing part 1020 may face the front surface of the first housing part 1010, and the front surface of the third housing part 1030 may face the rear surface of the first housing part 1010. In the third state 1000c, the rear surface of the second housing part 1020 may be exposed to the outside. The display 1070 may be disposed on the rear surface of the second housing part 1020. In the third state 1000c, the rear surface of the third housing part 1030 may be exposed to the outside. The camera 1075 may be disposed on the rear surface of the third housing part 1030. In the third state 1000c, the electronic device 1000 may be folded to improve portability, and may provide visual information through the display 1070 disposed on the rear surface of the second housing 1020.

The electronic device 1000 may further include a key button 1039. The key button 1039 may be exposed from a structure (e.g., an opening) formed on a side exterior surface of the third housing part 1030 and may partially protrude to the outside of the electronic device 1000. The key button 1039 may provide a physical input to processing circuitry inside the electronic device 1000, by a pressure transferred from the outside. The key button 1039 may not be included in the electronic device 1000 and may be implemented in another form, such as a soft key displayed on the flexible display 1040 or the display 1070.

The key button 1039 may be disposed on a side exterior surface of the third housing part 1030 so as to be exposed to the outside in the third state 1000c. As the key button 1039 is disposed on the side exterior surface of the third housing part 1030, it may be positioned in a direction the side of the third housing 1030 faces. Even if it is changed from the third state 1000c to the first state 1000a by the user looking at the display 1070, the position of the key button 1039 disposed on the side exterior surface of the third housing 1030 may not be moved. For example, referring to FIG. 10A, in the first state 1000a, when the flexible display 1040 is viewed from above, the key button 1039 may be disposed on the right side. Referring to FIG. 10B, in the third state 1000c, when the display 1070 is viewed from above, the key button 1039 may be disposed on the right side.

The flexible display 1040 may at least partially define the appearance of the electronic device 1000. The flexible display 1040 may be partially disposed within the foldable housing 1001. The flexible display 1040 may define the front surface of the electronic device 1000. The flexible display 1040 may include a first planar portion 1041, a second planar portion 1042, a third planar portion 1043, a first bending portion 1044, and a second bending portion 1045. The first planar portion 1041 of the flexible display 1040 may be disposed on the front surface of the first housing part 1010. The second planar portion 1042 of the flexible display 1040 may be disposed on the front surface of the second housing part 1020. The third planar portion 1043 of the flexible display 1040 may be disposed on the front surface of the third housing part 1030. The first bending portion 1044 of the flexible display 1040 may be disposed between the first planar portion 1401 and the third planar portion 1043 of the flexible display 1040. For example, the first bending portion 1044 of the flexible display 1040 may be disposed on the first hinge assembly 1050 connecting the first housing part 1010 and the second housing part 1020. The second bending portion 1045 of the flexible display 1040 may be disposed between the second planar portion 1042 and the third planar portion 1043 of the flexible display 1040. For example, the second bending portion 1045 of the flexible display 1040 may be disposed on the second hinge assembly 1060 connecting the second housing part 1020 and the third housing part 1030.

The first hinge assembly 1050 and the second hinge assembly 1060 may provide the first state 1000a of the electronic device 1000. The first planar portion 1041 of the flexible display 1040, the second planar portion 1042 of the flexible display 1040, and the third planar portion 1043 of the flexible display 1040 may face substantially the same direction. In the first state 1000a, the first bending portion 1044 and the second bending portion 1045 may be disposed on substantially the same horizontal plane as the first planar portion 1041, the second planar portion 1042, and the third planar portion 1043.

The first hinge assembly 1050 and the second hinge assembly 1060 may provide the second state 1000b of the electronic device 1000. In the second state 1000b, the first planar portion 1041 of the flexible display 1040 may face the second planar portion 1042 of the flexible display 1040, and the third planar portion 1043 of the flexible display 1040 may face the same direction as the second planar portion 1042 of the flexible display 1040. For example, the second planar portion 1042 and the third planar portion 1043 may be disposed on substantially the same horizontal plane.

In the second state 1000b, as the first bending portion 1044 of the flexible display 1040 is bent by the first hinge assembly 1050, the first bending portion 1044 of the flexible display 1040 may be folded so that the first planar portion 1041 of the flexible display 1040 and the second planar portion 1042 of the flexible display 1040 face different directions.

In the second state 1000b, the second bending portion 1045 of the flexible display 1040 is maintained in an unfolded state by the second hinge assembly 1060, and thus the second bending portion 1045 of the flexible display 1040 may be unfolded such that the second planar portion 1042 of the flexible display 1040 and the third planar portion 1043 of the flexible display 1040 face the same direction.

The first hinge assembly 1050 and the second hinge assembly 1060 may provide the third state 1000c of the electronic device 1000. In the third state 1000c, the second planar portion 1042 of the flexible display 1040 may face the first planar portion 1041 of the flexible display 1040, and the third planar portion 1043 of the flexible display 1040 may face the rear surface of the first housing part 1010.

In the third state 1000c, as the first bending portion 1044 of the flexible display 1040 is bent by the first hinge assembly 1050, the first bending portion 1044 of the flexible display 1040 may be folded so that the first planar portion 1041 of the flexible display 1040 and the second planar portion 1042 of the flexible display 1040 face different directions.

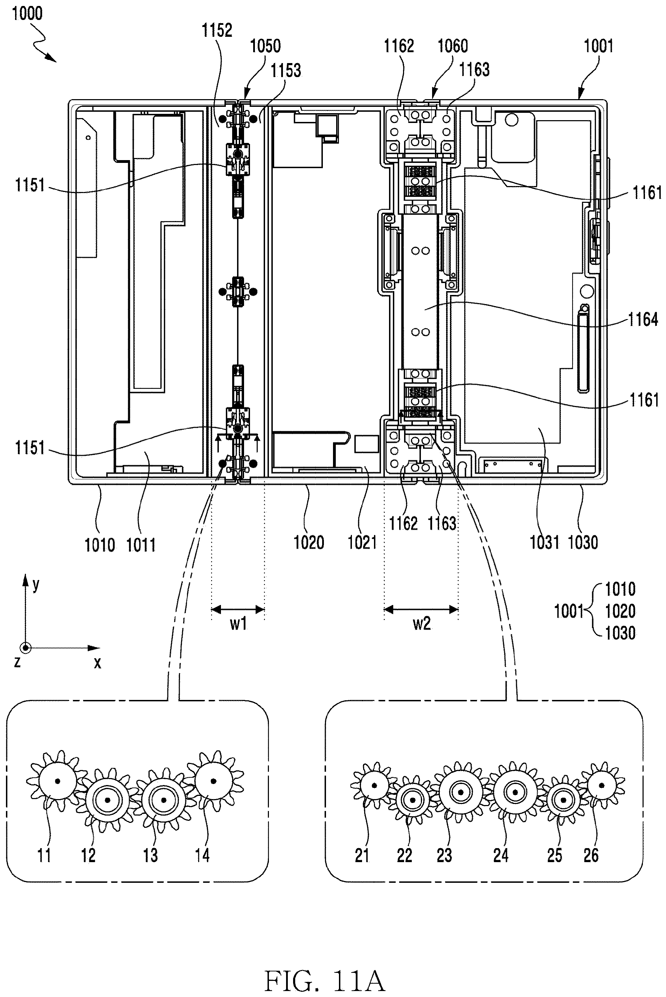

In the third state 1000c, as the second bending portion 1045 of the flexible display 1040 is bent by the second hinge assembly 1060, the second bending portion 1045 of the flexible display 1040 may be folded such that the second planar portion 1042 of the flexible display 1040 and the third planar portion 1043 of the flexible display 1040 face different directions. The second bending portion 1045 may further include a first deformable portion 1045a, a second deformable portion 1045b, and a planar portion 1045c. The first deformable portion 1045a may be disposed between the planar portion 1045c and the second planar portion 1042, and the second deformable portion 1045b may be disposed between the planar portion 1045c and the third planar portion 1043. The planar portion 1045c may be disposed between the first deformable portion 1045a and the second deformable portion 1045b. The planar portion 1045c may be supported by a support plate (e.g., a support plate 1164 of FIG. 11a) that is distinguished from the hinge plates (e.g., a third hinge plate 1162 and a fourth hinge plate 1163 of FIG. 11A) of the second hinge assembly 1060. Regardless of the state of the electronic device 1000, the planar portion 1045c may maintain a planar surface. The first deformable portion 1045a and the second deformable portion 1045b are unfolded in the first state 1000a and the second state 1000b, and in the third state 1000c, the first deformable portion 1045a and the second deformable portion 1045b may be bent so that the second planar portion 1042 and the third planar portion 1043 face different directions. In the third state 1000c, the first housing part 1010 may be disposed between the second housing part 1020 and the third housing part 1030. In the third state 1000c, the second bending portion 1045 of the flexible display 1040 disposed on the second hinge assembly 1060 may partially face a side exterior surface 1010c of the first housing part 1010.

The display area of the flexible display 1040 may include a first display area 1040a, a second display area 1040b, and a third display area 1040c. The display area refers to an area capable of providing visual information from the flexible display 1040. In the first state 1000a, the entire display area of the flexible display 1040 may be viewed from the front of the foldable housing 1001. For example, in the first state 1000a, the first display area 1040a, the second display area 1040b, and the third display area 1040c of the flexible display 1040 may be visually exposed. The electronic device 1000 may provide the user with a large display area including the first display area 1040a, the second display area 1040b, and the third display area 1040c.

In the second state 1000b, the display area of the flexible display 1040 may be partially visible from the front surface of the third housing part 1030. For example, the third display area 1040c may be visually exposed, and the first display area 1040a and the second display area 1040b may not be visually exposed.

In the third state 1000c, the display area of the flexible display 1040 may not be visible. For example, in the third state 1000c, the first display area 1040a, the second display area 1040b, and the third display area 1040c of the flexible display 1040 may not be visually exposed.

As a non-limiting example, when the flexible display 1040 is used to display a screen in the first state 1000a of the electronic device 1000, the first display area 1040a, the second display area 1040b, and the third display area 1040c of the flexible display 1040 may be activated. As a non-limiting example, in the third state 1000c, the first display area 1040a, the second display area 1040b, and the third display area 1040c of the flexible display 1040 may be deactivated. As a non-limiting example, when the flexible display 1040 is used to display a screen, in the second state 1000b of the electronic device 1000, the third display area 1040c may be activated, and the first display area 1040a and the second display area 1040b of the flexible display 1040 may be deactivated.

As a non-limiting example, when the flexible display 1040 is used to display a screen in the first state 1000a of the electronic device 1000, the first display area 1040a, the second display area 1040b, and the third display area 1040c of the flexible display 1040 may display visual information. As a non-limiting example, in the third state 1000c, the first display area 1040a, the second display area 1040b, and the third display area 1040c of the flexible display 1040 may provide a black image. As a non-limiting example, when the flexible display 1040 is used to display a screen, in the second state 1000b of the electronic device 1000, the third display area 1040c may provide visual information, and the first display area 1040a and the second display area 1040b of the flexible display 1040 may provide a black image.

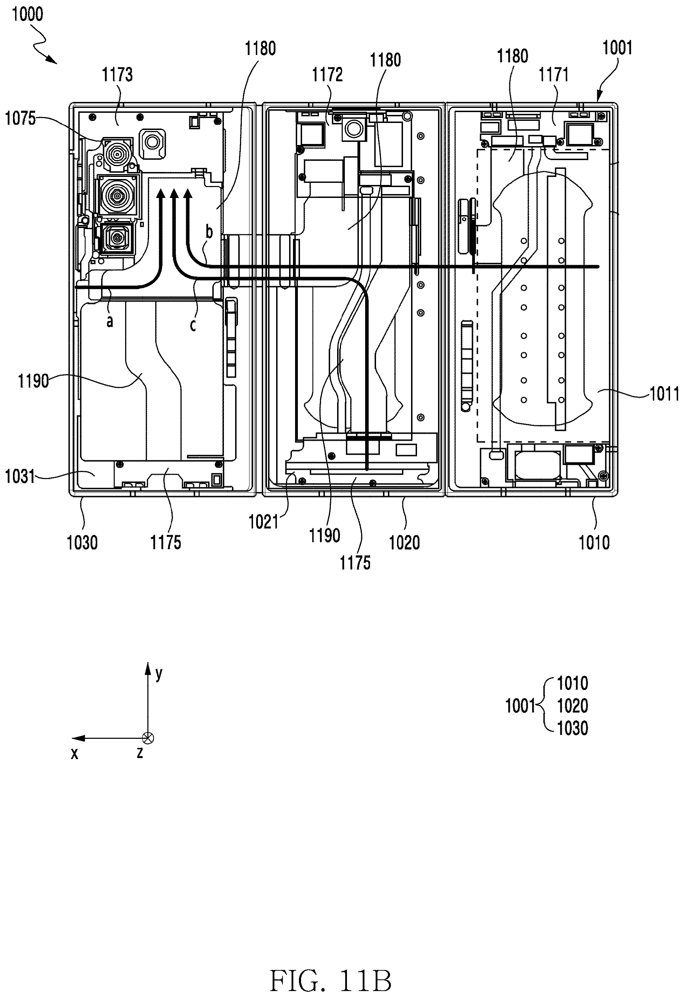

FIG. 11A is a plan view of an electronic device with a flexible display removed. FIG. 11B is a rear view of an electronic device with a rear cover and a display removed.

Referring to FIGS. 11A and 11B, the electronic device 1000 may include a first hinge assembly 1050 and a second hinge assembly 1060. A first width w₁ of the first hinge assembly 1050 may be narrower than a second width w₂ of the second hinge assembly 1060. The difference between the first width w₁ of the first hinge assembly 1050 and the second width w₂ of the second hinge assembly 1060 may be equal to or greater than the thickness of the first housing part 1010. For example, the second hinge assembly 1060 may have the second width w₂ greater than the first width w₁ such that the first housing part 1010 is disposed between the second housing part 1020 and the third housing part 1030 according to the third state 1000c. In terms of having a width narrower than that of the second hinge assembly 1060, the first hinge assembly 1050 may be referred to as a narrow hinge assembly. In terms of having a width greater than that of the first hinge assembly 1050, the second hinge assembly 1060 may be referred to as a wide hinge structure.

The first hinge assembly 1050 may include a first set 1151, a first hinge plate 1152, and a second hinge plate 1153. The first hinge plate 1152 may be coupled to the first support portion 1011 of the first housing part 1010. The second hinge plate 1153 may be coupled to the second support portion 1021 of the second housing part 1020. The gears g11, g12, g13, and g14 included in the first set 1151 of gears may be configured to rotate the first hinge plate 1152 and the second hinge plate 1153. For example, the gears g11, g12, g13, and g14 included in the first set 1151 of gears may rotate the second hinge plate 1153 (or the second housing part 1020) in conjunction with rotation of the first hinge plate 1152 (or the first housing part 1010). After the first hinge plate 1152 (or the first housing part 1010) is rotated, the gears g11, g12, g13, and g14 included in the first set 1151 of gears may be rotated according to rotation of the first hinge plate 1152 (or the first housing part 1010). The second hinge plate 1153 (or the second housing part 1020) may be rotated in conjunction with rotation of the first hinge plate 1152 according to rotation of the first set 1151 of gears. The gears g11, g12, g13, and g14 included in the first set 1151 of gears may include a first gear g11, a second gear g12, a third gear g13, and a fourth gear g14. The first gear g11 may be disposed adjacent to the first hinge plate 1152, and the fourth gear g14 may be disposed adjacent to the second hinge plate 1153. The second gear g12 and the third gear g13 may be disposed between the first gear g11 and the fourth gear g14. The first gear g11, the second gear g12, the third gear g13, and the fourth gear g14 may be sequentially engaged. According to the rotation of the first gear g11 in a first rotation direction (e.g., clockwise), the second gear g12 engaged with the first gear g11 may be rotated in a second rotation direction (e.g., counterclockwise) opposite to the first rotation direction. According to the rotation of the second gear g12 in the second rotation direction, the third gear g13 engaged with the second gear g12 may be rotated in the first rotation direction. The fourth gear g14 may be rotated in the second rotation direction according to the rotation of the third gear g13 in the first rotation direction. As the first gear g11 and the fourth gear g14 rotate in different directions, the first housing part 1010 connected to the first hinge plate 1152 and the second housing part 1020 connected to the second hinge plate 1153 may be folded or unfolded.

The second hinge assembly 1060 may include a second set 1161 of gears, a third hinge plate 1162, a fourth hinge plate 1163, and a support plate 1164. The third hinge plate 1162 may be coupled to the second support portion 1021 of the second housing part 1020. The fourth hinge plate 1163 may be coupled to the third support portion 1031 of the third housing part 1030. The gears g21, g22, g23, g24, g25, and g26 included in the second set 1161 of gears may be configured to rotate the third hinge plate 1162, and the fourth hinge plate 1163. For example, the gears g21, g22, g23, g24, g25, and g26 included in the second set 1161 of gears may rotate the fourth hinge plate 1163 (or the third housing part 1030) in conjunction with the rotation of the third hinge plate 1162 (or the second housing part 1020). After the third hinge plate 1162 (or the second housing part 1020) is rotated, the gears g21, g22, g23, g24, g25, and g26 included in the second set 1161 of gears may rotate according to the rotation of the third hinge plate 1162 (or the second housing part 1020). The fourth hinge plate 1163 (or the third housing part 1030) may rotate in conjunction with the rotation of the third hinge plate 1162 according to the rotation of the gears g21, g22, g23, g24, g25, and g26 included in the second set 1161 of gears.

The gears g21, g22, g23, g24, g25, and g26 included in the second set 1161 of the gears may include a first gear g21, a second gear g22, a third gear g23, a fourth gear g24, a fifth gear g25, and a sixth gear g26. The first gear g21 may be disposed adjacent to the third hinge plate 1162, and the sixth gear g26 may be disposed adjacent to the fourth hinge plate 1163. The second gear g22, the third gear g23, the fourth gear g24, and the fifth gear g25 may be disposed between the first gear g21 and the sixth gear g26. The first gear g21, the second gear g22, the third gear g23, the fourth gear g24, the fifth gear g25, and the sixth gear g26 may be sequentially engaged. According to the rotation of the first gear g21 in the first rotation direction (e.g., clockwise direction), the second gear g22 engaged with the first gear g21 may rotate in the second rotation direction (e.g., counterclockwise direction), which is opposite to the first rotation direction. According to the rotation of the second gear g22 in the second rotation direction, the third gear g23 engaged with the second gear g22 may rotate in the first rotation direction. The fourth gear g24 may rotate in the second rotation direction according to the rotation of the third gear g23 in the first rotation direction. The fifth gear g25 engaged with the fourth gear g24 may rotate in the first rotation direction according to the rotation of the fourth gear g24 in the second rotation direction. The sixth gear g26 engaged with the fifth gear g25 may rotate in the second rotation direction according to the rotation of the fifth gear g25 in the first rotation direction. As the first gear g21 and the sixth gear g26 are rotated in different directions, the second housing part 1020 connected to the third hinge plate 1162 and the third housing part 1030 connected to the fourth hinge plate 1163 may be folded or unfolded.

The first hinge assembly 1050 and the second hinge assembly 1060 may further include a spiral structure. The spiral structure may include a spiral groove formed in each hinge plate or a rotating member connected to the hinge plate, and a moving member sliding along the spiral groove. The hinge plates connected to the hinge assembly may be configured to rotate in substantially the same angular displacement through the spiral structure.

The electronic device 1000 may include a first printed circuit board 1171, a second printed circuit board 1172, and a third printed circuit board 1173.

The first printed circuit board 1171 may be disposed on the first support portion 1011 of the first housing part 1010. The hardware components within the first housing part 1010 may be disposed on the first printed circuit board 1171. The second printed circuit board 1172 may be disposed on the second support portion 1021 of the second housing part 1020. The third printed circuit board 1173 may be disposed on the third support portion 1031 of the third housing part 1030. The hardware components within the third housing part 1030 may be disposed on the third printed circuit board 1173.

The hardware components disposed on the first printed circuit board 1171 may support or independently operate the hardware components disposed on the second printed circuit board 1172 and/or the hardware components disposed on the third printed circuit board 1173.

The hardware components disposed on the second printed circuit board 1172 may support or independently operate the hardware components disposed on the first printed circuit board 1171 or the third printed circuit board 1173. The hardware components disposed on the second printed circuit board 1172 may include a speaker, a front camera and/or a display driver integrated circuitry.

The hardware components disposed on the third printed circuit board 1173 may include at least one processor (e.g., application processor (AP) or communication processor (CP)) including processing circuitry, a memory including one or more storage media, communication circuitry, and a rear camera 1075. The rear camera 1075 may be exposed through a rear structure (e.g., an opening) of the second housing part 1020.

The electronic device 1000 may further include a sub-printed circuit board 1175 and flexible printed circuit boards 1180 and 1190. The sub-printed circuit board 1175 may be disposed on at least a part of the first housing part 1010, the second housing part 1020, and the third housing part 1030. The flexible printed circuit boards 1180 and 1190 may include a first flexible printed circuit board 1180 and a second flexible printed circuit board 1190. The first flexible printed circuit board 1180 may electrically connect a printed circuit board disposed on each of the housing parts 1010, 1020, and 1030. The second flexible printed circuit board 1190 may connect the sub-printed circuit board 1175 and the printed circuit board in the housing part in which the sub-printed circuit board 1175 is disposed, via the second flexible printed circuit board 1190.

The components in the electronic device 1000 may be connected to at least one processor in the third printed circuit board 1173 through the flexible printed circuit boards 1180 and 1190. For example, a signal received from an antenna disposed in the third housing part 1030 may be transmitted to the third printed circuit board 1173, on which at least one processor (e.g., AP or CP) is disposed, via a signal path (a) provided by the first flexible printed circuit board 1180. The driving circuit for the flexible display 1040 disposed in the first housing part 1010 may be connected to the third printed circuit board 1173, on which the at least one processor (e.g., AP) is disposed, via a signal path (b) provided by the sub-printed circuit board 1175 and the first flexible printed circuit board 1180. The driving circuit for the display 1070 connected to the sub-printed circuit board 1175 disposed in the second housing part 1020 may be electrically connected to the third printed circuit board 1173, on which the at least one processor (e.g., AP) is disposed, via a signal path (c) provided by the sub-printed circuit board 1175, the first flexible printed circuit board 1180, and the second flexible printed circuit board 1190.

The electronic device 1000 may further include batteries. Each of the batteries may be attached to the support portions 1011, 1021, and 1031 included in the housing parts 1010, 1020, and 1030. The support portions 1011, 1021, and 1031 may support rechargeable batteries.

The arrangement of hardware components is of an example, and as opposed to the above description, the rear camera 1075 and the second printed circuit board 1172 may be disposed in the third housing part 1030, and the third printed circuit board 1173 may be disposed in the second housing part 1020, differently from the above.

While the first housing part 1010 and the third housing part 1030 are shown to rotate in the opposite direction with respect to the second housing part 1020, the disclosure are not limited thereto. For example, while changing from the first state 1000a to the third state 1000c, the first housing part 1010 may rotate counterclockwise with respect to the second housing part 1020, and the third housing part 1030 may rotate counterclockwise with respect to the second housing part 1020. As the first housing part 1010 and the third housing part 1030 rotate in the same direction, a portion of the display area of the flexible display 1040 may be visually exposed in the second state.

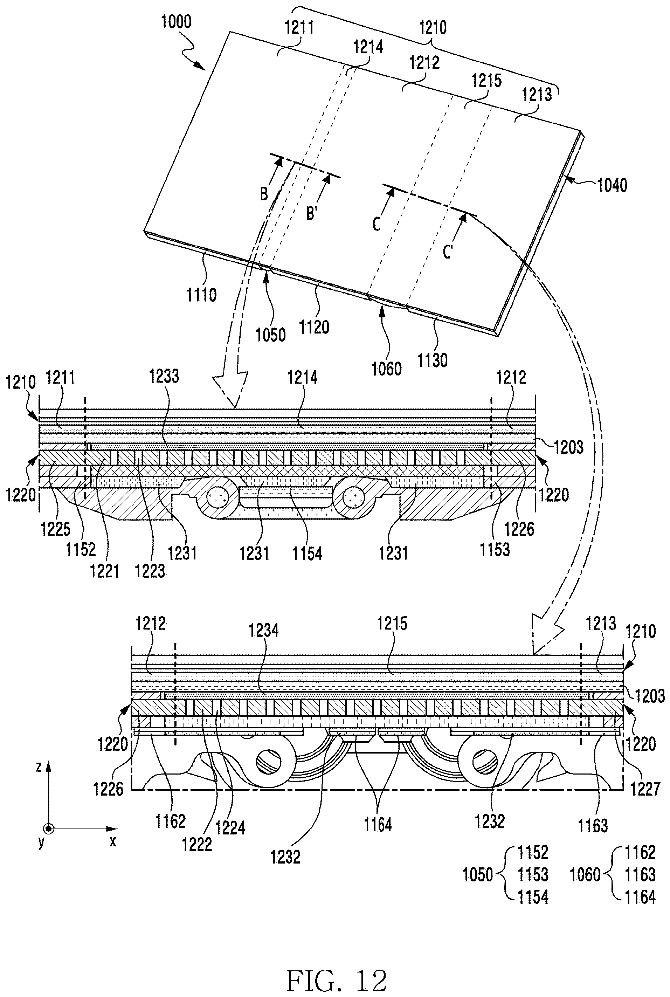

FIG. 12 is a cross-sectional view of a foldable electronic device according to an embodiment, taken along lines B-B' and C-C'.

Hereinafter, description will be made of magnets for mitigating and/or removing the crease of the first bending portion 1214 and the crease of the second bending portion 1215 of the foldable electronic device 1000. The foldable electronic device 1000 to be described later may be substantially the same as the foldable electronic device described above (e.g., the foldable electronic device 200 of FIG. 3) except that it includes two bending portions 1214 and 1215 and four magnets 1231, 1232, 1233, and 1234.

Referring to FIG. 12, according to an embodiment, the foldable housing 1001 may include a first housing part 1010, a second housing part 1020, and a third housing part 1030. The first hinge assembly 1050 may rotatably connect the first housing part 1010 and the second housing part 1020. The first hinge assembly 1050 may include hinge plates (e.g., a first hinge plate 1152 and a second hinge plate 1153). For example, the first housing part 1010 may be coupled to the first hinge plate 1152, and the second housing part 1020 may be coupled to the second hinge plate 1153. The second hinge assembly 1060 may rotatably connect the second housing part 1020 and the third housing part 1030. The second hinge assembly 1060 may include hinge plates (e.g., a third hinge plate 1162 and a fourth hinge plate 1163). For example, the second housing part 1020 may be coupled to the third hinge plate 1162, and the third housing part 1030 may be coupled to the fourth hinge plate 1163.

According to an embodiment, the flexible display 1040 may include a display panel 1210 and a support plate 1220. The display panel 1210 may include a first planar portion 1211, a second planar portion 1212, a third planar portion 1213, a first bending portion 1214, and a second bending portion 1215. The first planar portion 1211 may be a portion of the flexible display 1040 supported by the first housing part 1010. The second planar portion 1212 may be a portion of the flexible display 1040 supported by the second housing part 1020. The third planar portion 1213 may be a portion of the flexible display 1040 supported by the third housing part 1030. The first bending portion 1214 may be disposed between the first planar portion 1211 and the second planar portion 1212 and may be configured to be bent by rotation of the first housing part 1010 and the second housing part 1020. The second bending portion 1215 may be disposed between the second planar portion 1212 and the third planar portion 1213, and may be configured to be bent by rotation of the second housing part 1020 and the third housing part 1030.

According to an embodiment, the support plate 1220 may include a first portion 1221 and a second portion 1222. The first portion 1221 may be disposed under the first bending portion 1214 and may include a plurality of first slits 1223. The second portion 1222 may be disposed under the second bending portion 1215 and may include a plurality of second slits 1224. Based on the rotation of the first housing part 1010 and the second housing part 1020, the shapes of the plurality of first slits 1223 may be deformed, and by the deformation of the shapes of the plurality of first slits 1223, the first portion 1221 may be bent together with the first housing part 1010 and the second housing part 1020. Based on the rotation of the second housing part 1020 and the third housing part 1030, the shapes of the plurality of second slits 1224 may be deformed, and by the deformation of the shapes of the plurality of second slits 1224, the second portion 1222 may be bent together with the second housing part 1020 and the third housing part 1030. The support plate 1220 may include a third portion 1225 disposed under the first planar portion 1211 (e.g., -z direction), a fourth portion 1226 disposed under the second planar portion 1212, and a fifth portion 1227 disposed under the third planar portion 1213. The first portion 1221 may be disposed between the third portion 1225 and the fourth portion 1226, and the second portion 1222 may be disposed between the fourth portion 1226 and the fifth portion 1227.

According to an embodiment, the first hinge assembly 1050 may include a first magnet 1231. Each of the hinge plates 1152 and 1153 of the first hinge assembly 1050 may include the first magnet 1231. For example, the first hinge plate 1152 and the second hinge plate 1153 may include the first magnet 1231. To support the first bending portion 1214, a first support bar 1154 may be disposed below the first bending portion 1214 (e.g., -z direction). The first support bar 1154 may also include the first magnet 1231.

According to an embodiment, the second hinge assembly 1060 may include a second magnet 1232. Each of the hinge plates 1162 and 1163 of the second hinge assembly 1060 may include the second magnet 1232. For example, the third hinge plate 1162 and the fourth hinge plate 1163 may include the second magnet 1232. To support the second bending portion 1215, a second support bar 1164 may be disposed below the second bending portion 1215 (e.g., -z direction). The second support bar 1164 may also include the second magnet 1232.

According to an embodiment, the flexible display 1040 may include a third magnet 1233 and a fourth magnet 1234. The third magnet 1233 may be paired with the first magnet 1231, and the fourth magnet 1234 may be paired with the second magnet 1232. For example, the support plate 1220 may include the third magnet 1233 and the fourth magnet 1234. The third magnet 1233 may be disposed between the first bending portion 1214 of the display panel 1210 and the first portion 1221 including a plurality of first slits 1223. The fourth magnet 1234 may be disposed between the second bending portion 1215 of the display panel 1210 and the second portion 1222 including a plurality of second slits 1224. When a protective film 1203 is attached underneath the display panel 1210, the third magnet 1233 and the fourth magnet 1234 may contact the protective film 1203. However, in embodiments of the disclosure, the positions of the third magnet 1233 and the fourth magnet 1234 are not limited to the positions described above. For example, the descriptions of the arrangement position of the second magnet (e.g., the second magnet 340 of FIG. 3) made with reference to FIGS. 6A, 6B, 6C, 6D, and 6E may be substantially identically applied to the third magnet 1233 and the fourth magnet 1234 of FIG. 12. For example, the third magnet 1233 and the fourth magnet 1234 may be disposed within the protective film 1203, as shown in FIG. 6A. For example, the third magnet 1233 and the fourth magnet 1234 may be disposed below the support plate 1220 (e.g., in -z direction), as shown in FIG. 6B. The third magnet 1233 may be disposed under the first portion 1221, and the fourth magnet 1234 may be disposed under the second portion 1222. For example, the third magnet 1233 and the fourth magnet 1234 may form a part of the first portion 1221 and a part of the second portion 1222, as shown in FIG. 6C. The third magnet 1233 may form a part of the first portion 1221, and the fourth magnet 1234 may form a part of the second portion 1222. For example, the third magnet 1233 and the fourth magnet 1234 may form a part of the layers forming the support plate 1220, as shown in FIG. 6D. For example, the third magnet 1233 and the fourth magnet 1234 may be disposed within the first portion 1221 and the second portion 1222, as shown in FIG. 6E. The third magnet 1233 may be disposed in the first portion 1221, and the fourth magnet 1234 may be disposed in the second portion 1222. In addition to the above, various embodiments may be possible.

According to an embodiment, the foldable electronic device 1000 may be configured to cause an attractive force between the first magnet 1231 and the third magnet 1233 and/or an attractive force between the second magnet 1232 and the fourth magnet 1234, based on the state of the foldable electronic device 1000. In a case of the foldable electronic device 1000 shown in FIG. 12, as the flexible display 1040 includes the first bending portion 1214 and the second bending portion 1215, it may be bent at two portions. The foldable electronic device 1000 may mitigate and/or remove the crease in the first bending portion 1214 by causing the attractive force between the first magnet 1231 and the third magnet 1233 while the first bending portion 1214 is planar. The foldable electronic device 1000 may mitigate and/or remove the crease in the second bending portion 1215 by causing the attractive force between the second magnet 1232 and the fourth magnet 1234 while the second bending portion 1215 is planar.

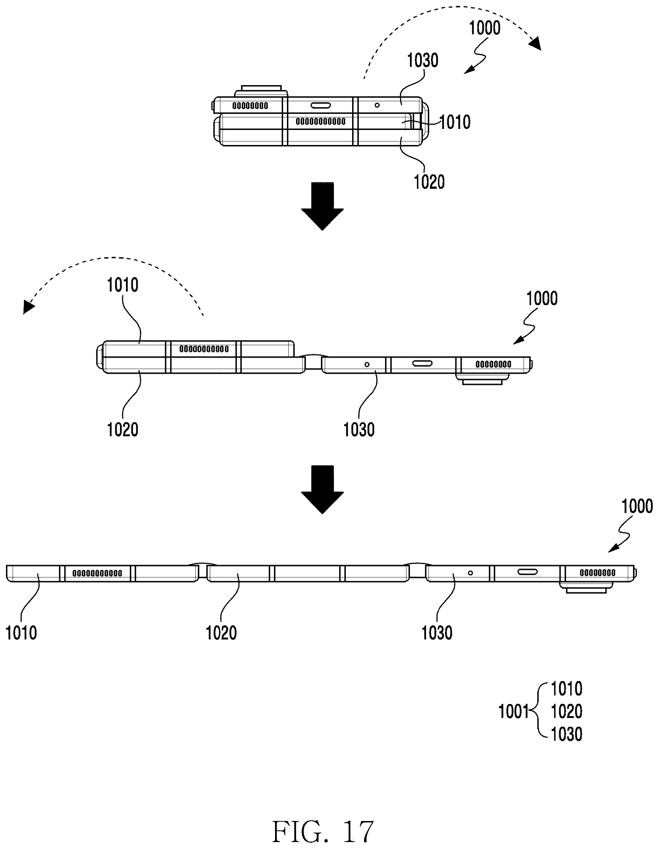

Structures of the foldable electronic device 1000 including three housing parts may vary. The structures of the foldable electronic device 1000 will be described later with reference to FIGS. 17, 18, and 19. For example, the size of the first hinge assembly 1050 and the size of the second hinge assembly 1060 may be different or the same. In the folded state of the foldable electronic device 1000, in the case of the foldable electronic device 1000 having a structure in which any one of the three housing parts is positioned between the other two housing parts, a width of the second hinge assembly 1060 may be greater than that of the first hinge assembly 1050. The first hinge assembly 1050 may be referred to as a narrow hinge in terms of having a relatively narrower width, and the second hinge assembly 1060 may be referred to as a wide hinge in terms of having a relatively wider perspective.

In the following description, for convenience of explanation, the states caused by rotation of the first housing part 1010 and the second housing part 1020 may be referred to as a first unfolded state, a first folded state, and a first intermediate state, and the state caused by rotation of the second housing part 1020 and the third housing part 1030 may be referred to as a second unfolded state, a second folded state, and a second intermediate state. The first unfolded state may be referred to a state in which the first housing part 1010 and the second housing part 1020 are disposed on substantially the same plane, as the first housing part 1010 and the second housing part 1020 are unfolded. The first folded state may be referred to a state in which the first housing part 1010 and the second housing part 1020 are disposed to lie one upon another or overlap each other, as the first housing part 1010 and the second housing part 1020 are folded. The first intermediate state may be referred to as intermediate states between the first folded state and the first unfolded state. The second unfolded state may be referred to a state in which the second housing part 1020 and the third housing part 1030 are disposed on substantially the same plane, as the second housing part 1020 and the third housing part 1030 are unfolded. The second folded state may be referred to a state in which the second housing part 1020 and the third housing part 1030 are disposed to lie one upon another or overlap each other, as the second housing part 1020 and the third housing part 1030 are folded. The second intermediate state may be referred to as intermediate states between the second folded state and the second unfolded state.

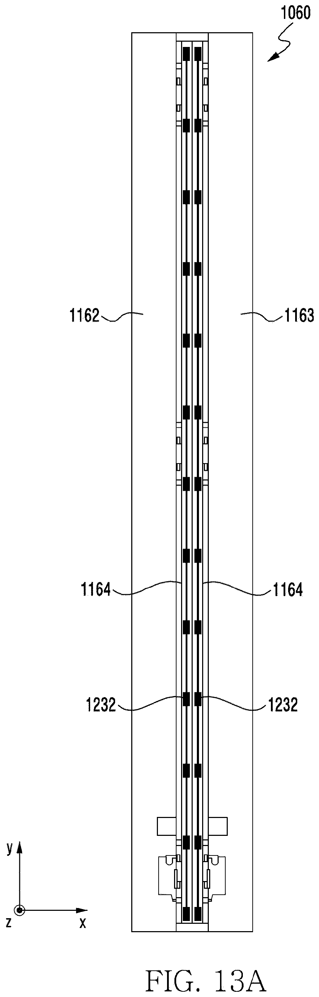

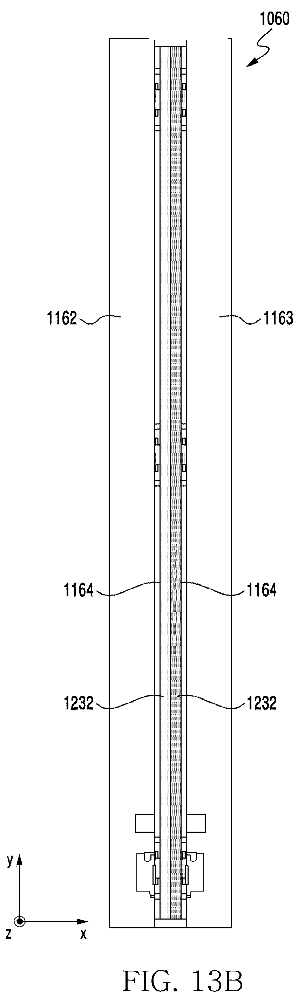

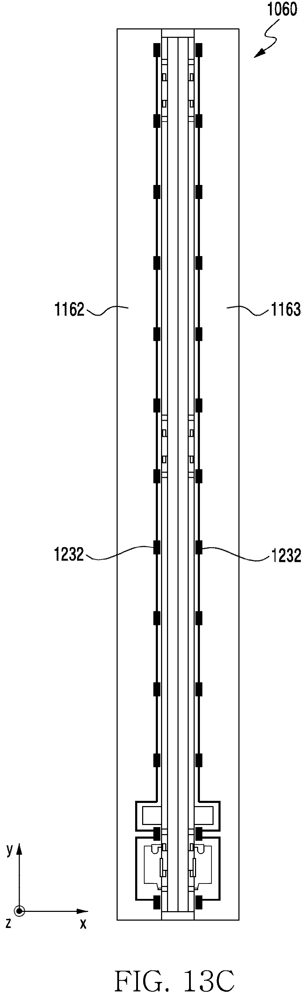

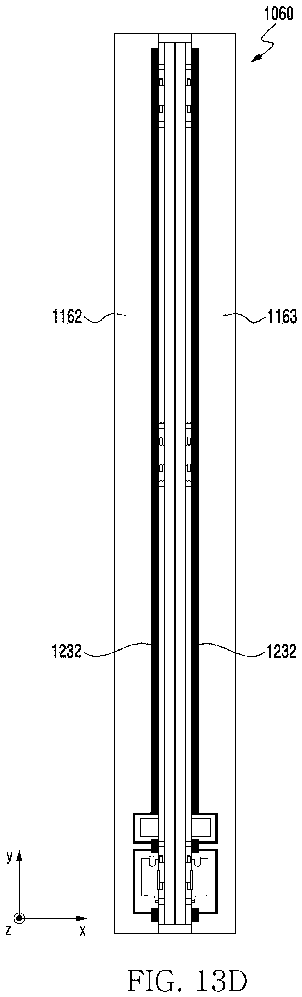

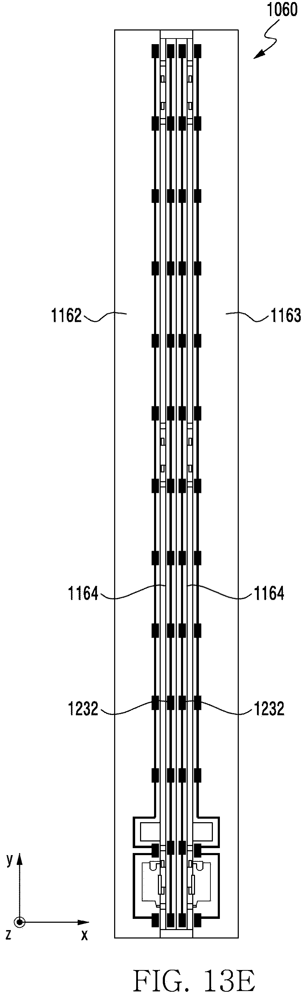

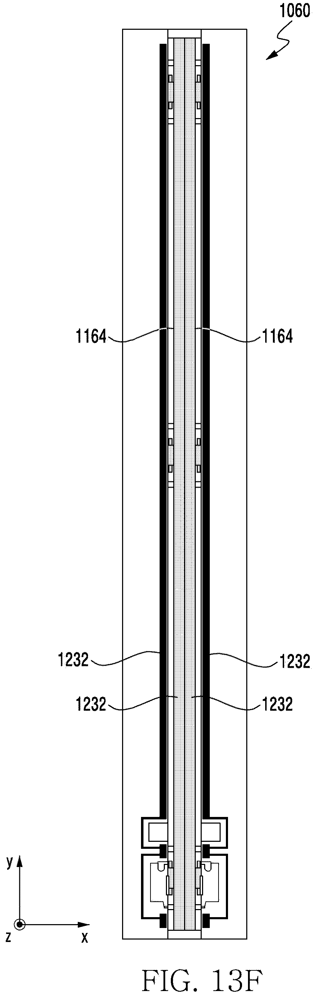

FIGS. 13A, 13B, 13C, 13D, 13E, and 13F each illustrate arrangement structures of a first magnet according to various embodiments.

Although the second hinge assembly 1060 and the second magnet 1232 of FIG. 12 are illustrated in FIGS. 13A, 13B, 13C, 13D, 13E, and 13F, the descriptions made below of the second hinge assembly 1060 and the second magnet 1232 may be applied to the first hinge assembly (e.g., the first hinge assembly 1050 of FIG. 12) and the first magnet (e.g., the first magnet 1231 of FIG. 12) in substantially the same manner.

Referring to FIG. 13A, the second magnet 1232 may be disposed within the second support bar 1164 between the hinge plates 1162 and 1163. For example, the second hinge assembly 1060 may include the second support bar 1164 disposed between the third hinge plate 1162 and the fourth hinge plate 1163. The second magnet 1232 may be disposed in a patterned shape within the second support bar 1164.

Referring to FIG. 13B, the second magnet 1232 may form at least a portion of the second support bar 1164 between the hinge plates 1162 and 1163. For example, the second hinge assembly 1060 may include the second support bar 1164 disposed between the third hinge plate 1162 and the fourth hinge plate 1163. The second magnet 1232 may at least partially form the second support bar 1164. For example, the second support bar 1164 may be formed of a magnetic material, thereby including the second magnet 1232.

Referring to FIG. 13C, the second magnet 1232 may be disposed within the hinge plates 1162 and 1163. For example, the second hinge assembly 1060 may include a third hinge plate 1162 and a fourth hinge plate 1163. The second magnet 1232 may be disposed in a patterned shape within the third hinge plate 1162 and the fourth hinge plate 1163. When an opening or a structure is positioned within the third hinge plate 1162 and the fourth hinge plate 1163, the second magnet 1232 in a patterned shape may bypass the opening or structure.

Referring to FIG. 13D, the second magnet 1232 may form at least a portion of the hinge plates 1162 and 1163. For example, the second hinge assembly 1060 may include a third hinge plate 1162 and a fourth hinge plate 1163. The second magnet 1232 may at least partially form the third hinge plate 1162 and the fourth hinge plate 1163. A portion of the second magnet 1232 may be disposed within the third hinge plate 1162 and the fourth hinge plate 1163 in a patterned shape. When an opening or a structure is located in the third hinge plate 1162 and the fourth hinge plate 1163, the portion of the patterned second magnet 1232 may bypass the opening or structure.

Referring to FIG. 13E, the second magnet 1232 may be disposed within the hinge plates 1162 and 1163, and the second support bar 1164. For example, the second hinge assembly 1060 may include a third hinge plate 1162, a fourth hinge plate 1163, and a second support bar 1164 disposed between the third hinge plate 1162 and the fourth hinge plate 1163. The second magnet 1232 may be disposed in a patterned form within the third hinge plate 1162, the fourth hinge plate 1163, and the second support bar 1164.

Referring to FIG. 13F, the second magnet 1232 may at least partially form the hinge plates 1162 and 1163, and the second support bar 1164. For example, the second hinge assembly 1060 may include the third hinge plate 1162, the fourth hinge plate 1163, and the second support bar 1164 between the third hinge plate 1162 and the fourth hinge plate 1163. The second magnet 1232 may at least partially form the third hinge plate 1162, the fourth hinge plate 1163, and the second support bar 1164. A portion of the second magnet 1232 may be disposed within the third hinge plate 1162 and the fourth hinge plate 1163 in a patterned shape. When an opening or structure is located in the third hinge plate 1162 and the fourth hinge plate 1163, the portion of the patterned second magnet 1232 may bypass the opening or structure. Various embodiments may be possible in addition to the above.

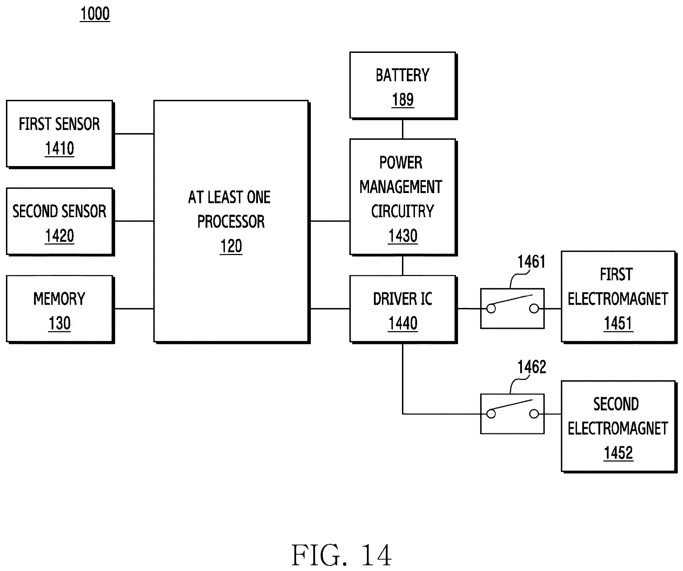

FIG. 14 is a block diagram illustrating components of a foldable electronic device according to an embodiment.

Referring to FIG. 14, the foldable electronic device 1000 according to an embodiment may include a first sensor 1410, a second sensor 1420, a memory (e.g., the memory 130 of FIG. 1), at least one processor (e.g., the processor 120 of FIG. 1), a battery (e.g., the battery 189 of FIG. 1), power management circuitry 1430, driver integrated circuitry 1440, a first electromagnet 1451, and a second electromagnet 1452.

The components illustrated in FIG. 4 may be substantially the same as the components shown in FIG. 14. Comparing FIG. 4 with FIG. 14, the foldable electronic device 200 of FIG. 4 and the foldable electronic device 1000 of FIG. 14 may be substantially the same except for a difference of including two sensors and two electromagnets. Descriptions made with reference to FIG. 4 may be substantially identically applied to the components shown in FIG. 14, and redundant descriptions may be omitted.

According to an embodiment, the first sensor 1410 and the second sensor 1420 may be used to identify the state of the foldable electronic device 1000.

According to an embodiment, the first sensor 1410 may be used to identify a first folded state, a first unfolded state, or a first intermediate state according to rotation of the first housing part 1010 and the second housing part 1020. For example, the first sensor 1410 may be configured to provide data indicating angle information between the first housing part 1010 and the second housing part 1020 to at least one processor 120. The at least one processor 120 may be configured to identify the first unfolded state, the first folded state, or the first intermediate state of the foldable electronic device 1000 based on data received from the sensor 410.

According to an embodiment, the second sensor 1420 may be used to identify a second folded state, a second unfolded state, or a second intermediate state according to rotation of the second housing part 1020 and the third housing part 1030. For example, the second sensor 1420 may be configured to provide data indicating angle information between the second housing part 1020 and the third housing part 1030 to the at least one processor 120. The at least one processor 120 may be configured to identify the second unfolded state, the second folded state, or the second intermediate state of the foldable electronic device 1000 based on data received from the sensor 410.

Depending on the structure of the foldable housing 1001 of the foldable electronic device 1000, the sequence in which the foldable housing 1001 is folded or unfolded may be determined. A difference on the structure of the foldable housing 1001 will be described later.

According to an embodiment, an attractive force between the first magnet 1231 and the third magnet 1233 may be caused based on the first unfolded state in which the first housing part 1010 and the second housing part 1020 are unfolded with respect to each other. For example, within the first unfolded state, the first bending portion 1214 may be substantially flat. When the first bending portion 1214 is substantially flat, the attractive force between the first magnet 1231 and the third magnet 1233 may be caused. The first bending portion 1214 is pulled by the attractive force, and therefore, the crease in the first bending portion 1214 may be mitigated and/or removed.

According to an embodiment, an attractive force between the second magnet 1232 and the fourth magnet 1234 may be caused based on the second unfolded state in which the second housing part 1020 and the third housing part 1030 are unfolded with respect each other. For example, in the second unfolded state, the second bending portion 1215 may be substantially flat. When the second bending portion 1215 is substantially flat, the attractive force between the second magnet 1232 and the fourth magnet 1234 may be caused. The second bending portion 1215 may be pulled by the attractive force, and thus the crease in the second bending portion 1215 may be alleviated and/or removed.

According to an embodiment, at least one of the first magnet 1231 and the third magnet 1233 may be a first electromagnet 1451 electrically connected to the battery 189. At least one of the second magnet 1232 and the fourth magnet 1234 may be a second electromagnet 1452 electrically connected to the battery 189. The first electromagnet 1451 and the second electromagnet 1452 may be magnetized when a current is supplied from the battery 189. In a non-magnetic state, the first electromagnet 1451 and the second electromagnet 1452 cannot cause an attractive force.

According to an embodiment, the first electromagnet 1451 and the second electromagnet 1452 may be electrically connected to the driver integrated circuitry 1440. The driver integrated circuitry 1440 may be configured to supply a current provided from the battery 189 to the first electromagnet 1451 and/or the second electromagnet 1452 through the power management circuitry 1430. For example, the first switch circuitry 1461 may be disposed between the driver integrated circuitry 1440 and the first electromagnet 1451, and the second switch circuitry 1462 may be disposed between the driver integrated circuitry 1440 and the second electromagnet 1452. The driver integrated circuitry 1440 may control the first switch circuitry 1461 to supply a current from the battery 189 to the first electromagnet 1451 or not to supply a current from the battery 189 to the first electromagnet 1451. The driver integrated circuitry 1440 may control the second switch circuitry 1462 to supply a current from the battery 189 to the second electromagnet 1452 or not to supply a current from the battery 189 to the second electromagnet 1452. The at least one processor 120 may be configured to control the driver integrated circuitry 1440.

According to an embodiment, the at least one processor 120 may be configured to identify the state of the foldable electronic device 1000 through the first sensor 1410 and the second sensor 1420, and control whether or not to supply a current from the battery 189 to the first electromagnet 1451 and/or the second electromagnet 1452, based on the identified state of the foldable electronic device 1000. For example, the at least one processor 120 may be configured to control the driver integrated circuitry 1440 to control whether to supply a current to the first electromagnet 1451 and/or the second electromagnet 1452.

Hereinafter, an operation in which the at least one processor 120 controls supplying of current to the second electromagnets 1452 will be described. The order that the foldable housing 1001 is folded or unfolded may vary according to the structure of the foldable housing 1001, but the operation of controlling the first electromagnet 1451 and/or the second electromagnet 1452 may be substantially the same regardless of the structure of the foldable housing 1001.

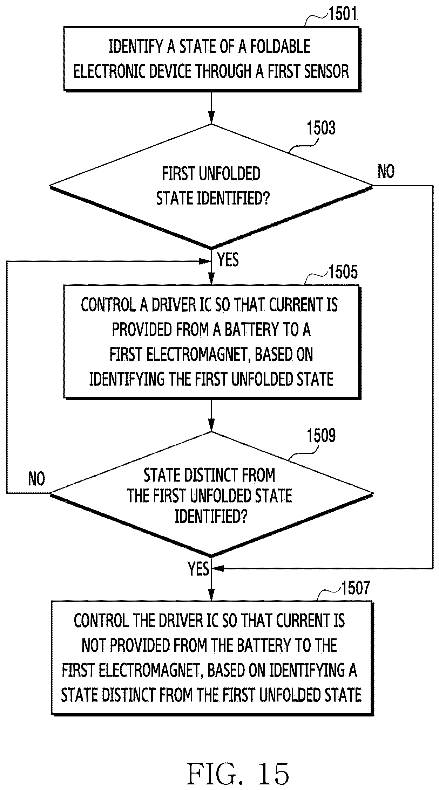

FIG. 15 is a flowchart illustrating an operation of a foldable electronic device according to an embodiment controlling supply of current to the first electromagnet.

The operations of FIG. 15 may be referred to as operations caused by the foldable electronic device (e.g., the foldable electronic device 1000 of FIG. 14), when the instructions stored in the memory (e.g., the memory 130 of FIG. 14) are executed by the at least one processor (e.g., the at least one processor 120 of FIG. 14).

Referring to FIG. 15, in operation 1501, the instructions may cause the foldable electronic device 1000 to identify a state of the foldable electronic device 1000 using the first sensor (e.g., the first sensor 1410 of FIG. 14), when executed individually or collectively by the at least one processor 120.

According to an embodiment, the first sensor 1410 may be configured to provide data indicating a state (e.g., the first unfolded state, the first folded state, and the first intermediate state) of the foldable electronic device 1000 to the at least one processor 120. For example, the at least one processor 120 may provide data indicating angle information between the first housing part (e.g., the first housing part 1010 of FIG. 12) and the second housing part (e.g., the second housing part 1020 of FIG. 12) to the at least one processor 120. The at least one processor 120 may be configured to receive the data from the first sensor 1410 and identify the state of the foldable electronic device 1000 based on the data. For example, the at least one processor 120 may be configured to identify the first unfolded state of the foldable electronic device 1000, when an angle between the first housing part 1010 and the second housing part 1020 identified from the data is within a first angle range (e.g., about 175 degrees to about 185 degrees). For example, the at least one processor 120 may be configured to identify the first intermediate state of the foldable electronic device 1000, when the angle between the first housing part 1010 and the second housing part 1020 identified from the data is within a second angle range (e.g., about 5 degrees to about 175 degrees). For example, the at least one processor 120 may be configured to identify the first folded state of the foldable electronic device 1000, when the angle between the first housing part 1010 and the second housing part 1020 identified from the data is within a third angle range (e.g., about 0 degrees to about 5 degrees). The numerical values of the above-described angle range are only exemplary, and embodiments of the disclosure are not limited thereto.

In operation 1503, the instructions may, when executed individually or collectively by the at least one processor 120, cause the foldable electronic device 1000 to determine whether the first unfolded state of the foldable electronic device 1000 has been identified.

According to an embodiment, the at least one processor 120 may be configured to determine whether the first unfolded state of the foldable electronic device 1000 has been identified, in order to determine whether a condition for supplying current to the first electromagnet 1451 is satisfied. For example, when the identified state of the foldable electronic device 1000 is in the first unfolded state, operation 1505 may be performed. For example, when the identified state of the foldable electronic device 1000 is a state distinguished from the first unfolded state, operation 1507 may be performed. Here, when the state of the foldable electronic device 1000 is a state distinguished from the first unfolded state, it may be referred to as a case in which the first folded state of the foldable electronic device 1000 or the first intermediate state of the foldable electronic device 1000 is identified.

In operation 1505, the instructions, when executed individually or collectively by at least one processor 120, may cause the foldable electronic device 1000 to control the driver integrated circuitry (e.g., the driver integrated circuitry 1440 of FIG. 14) such that current is provided from the battery (e.g., the battery 189 of FIG. 14) to the first electromagnet (e.g., the first electromagnet 1451 of FIG. 14), based on identifying the first unfolded state of the foldable electronic device 1000.

According to an embodiment, the at least one processor 120 may magnetize the first electromagnet 1451 based on identifying the first unfolded state of the foldable electronic device 1000. The at least one processor 120 may be configured to control the driver integrated circuitry 1440 to supply a current from the battery 189 to the first electromagnet 1451 for magnetization of the first electromagnet 1451. For example, the driver integrated circuitry 1440 may be controlled by the at least one processor 120 to supply a current supplied from the battery 189 to the first electromagnet 1451 through the power management circuitry 1430. For example, the driver integrated circuitry 1440 may control the first switch circuitry (e.g., the first switch circuitry 1461 of FIG. 14) to electrically connect the driver integrated circuitry 1440 to the first electromagnet 1451, and the current may be provided from the battery 189 to the first electromagnet 1451 via the power management circuitry 1430, the driver integrated circuitry 1440, and the first switch circuitry 1461.

According to an embodiment, as the current is supplied to the first electromagnet 1451, the first electromagnet 1451 may be magnetized. When the first electromagnet 1451 is magnetized, attractive force between the first magnet (e.g., the first magnet 1231 of FIG. 12) and the third magnet (e.g., the third magnet 1233 of FIG. 12) may be caused. For example, when the first magnet 1231 corresponds to the first electromagnet 1451, and the third magnet 1233 corresponds to a permanent magnet, the attractive force between the first magnet 1231 and the third magnet 1233 may occur as the first magnet 1231, which is the first electromagnet 1451, is magnetized. The first bending portion 1214 may be substantially flat in the first unfolded state of the foldable electronic device 1000. The attractive force may mitigate or remove the crease by pulling the first bending portion 1214 of the substantially flat display panel 1210.

In operation 1507, the instructions, when executed individually or collectively by at least one processor 120, may cause the foldable electronic device 1000 to control the driver integrated circuitry 1440 so that no current is provided from the battery 189 to the first electromagnet 1451, based on identifying a state (e.g., the first unfolded state or the first intermediate state) distinct from the first unfolded state of the foldable electronic device 1000.

According to an embodiment, the at least one processor 120 may not magnetize the first electromagnet 1451, based on identifying the first folded state of the foldable electronic device 1000 or the first intermediate state of the foldable electronic device 1000, which is different from the first unfolded state of the foldable electronic device 1000. The at least one processor 120 may be configured to control the driver integrated circuitry 1440 so that no current is provided from the battery 189 to the first electromagnet 1451 (or refrain from providing a current from the battery 189 to the first electromagnet 1451). For example, the driver integrated circuitry 1440 may be controlled by the at least one processor 120 not to provide a current provided from the battery 189 to the first electromagnet 1451 through the power management circuitry 1430. For example, the driver integrated circuitry 1440 may control the first switch circuitry 1461 to electrically disconnect the driver integrated circuitry 1440 from the first electromagnet 1451. As the driver integrated circuitry 1440 and the first electromagnet 1451 are electrically disconnected, the current cannot be suppled from the battery 189 to the first electromagnet 1451, so the first electromagnet 1451 may not be magnetized.

According to an embodiment, as no current is supplied to the first electromagnet 1451, the first electromagnet 1451 cannot be magnetized. If the first electromagnet 1451 is not magnetized, no attractive force between the first magnet 1231 and the third magnet 1233 may be caused. For example, when the first magnet 1231 corresponds to the first electromagnet 1451, and the third magnet 1233 corresponds to a permanent magnet, the first magnet 1231, which is the first electromagnet 1451, is not magnetized, and thus the attractive force between the first magnet 1231 and the third magnet 1233 may not be caused. The first bending portion (e.g., the first bending portion 1214 of FIG. 12) may be at least partially bent in the first folded state of the foldable electronic device 1000 or the first intermediate state of the foldable electronic device 1000. When the attractive force occurs while the first bending portion 1214 is at least partially bent, damage to the flexible display 1040 may be caused. In the first folded state of the foldable electronic device 1000 or the first intermediate state of the foldable electronic device 1000, the foldable electronic device 1000 may not provide current to the first electromagnet 1451 in order to prevent or reduce damage to the flexible display (e.g., the flexible display 1040 of FIG. 12).

Following the operation 1505, operation 1509 may be performed. In operation 1509, the instructions, when executed individually or collectively by the at least one processor 120, may cause the foldable electronic device 1000 to determine whether it has identified a state distinguished from the first unfolded state (e.g., the first folded state or the first intermediate state of the foldable electronic device 1000). For example, when the identified state of the foldable electronic device 1000 is in the first folded state or the first intermediate state, operation 1507 may be performed. When the identified state of the foldable electronic device 1000 is not a state distinguished from the first unfolded state and it is the first unfolded state, the operation 1505 may be performed again. Here, whether the first folded state of the foldable electronic device 1000 or the first intermediate state of the foldable electronic device 1000 is identified may be referred to as a case in which the first unfolded state of the foldable electronic device 1000 is not identified.

According to an embodiment, when the state of the foldable electronic device 1000 is changed from the first unfolded state to the first folded state or the first intermediate state, operation 1507 may be performed. In operation 1507, the at least one processor 120 may be configured to control the driver integrated circuitry 1440 so that no current is supplied from the battery 189 to the first electromagnet 1451. Since the state of the foldable electronic device 1000 is changed from the first unfolded state to the first folded state or the first intermediate state, the first bending portion 1214 of the display panel 1210 may be at least partially bent. In this case, the at least one processor 120 may be configured to release magnetization of the first electromagnet 1451 in order to prevent or reduce damage to the flexible display 1040.

According to an embodiment, when the state of the foldable electronic device 1000 is maintained in the first unfolded state, the operation 1505 may be performed. In operation 1505, the at least one processor 120 may be configured to control the driver integrated circuitry 1440 to provide current from the battery 189 to the first electromagnet 1451. Since the state of the foldable electronic device 1000 is maintained in the first unfolded state, the first bending portion 1214 of the display panel 1210 may be substantially flat. In this case, the at least one processor 120 may be configured to maintain the magnetization of the first electromagnet 1451 in order to reduce and/or remove the crease of the first bending portion 1214.

As described above, the foldable electronic device 1000 may be configured to cause an attractive force between the first magnet 1231 and the third magnet 1233, based on the first unfolded state of the foldable electronic device 1000. In the first unfolded state of the foldable electronic device 1000, the first bending portion 1214 of the display panel 1210 may not be bent and may be substantially flat. As the first bending portion 1214 that is substantially flat is pulled by the attractive force between the first magnet 1231 and the third magnet 1233, the crease may be removed. According to an embodiment, by mitigating and/or removing the crease in the first bending portion 1214, the quality of visual information displayed through the flexible display 1040 may be enhanced.

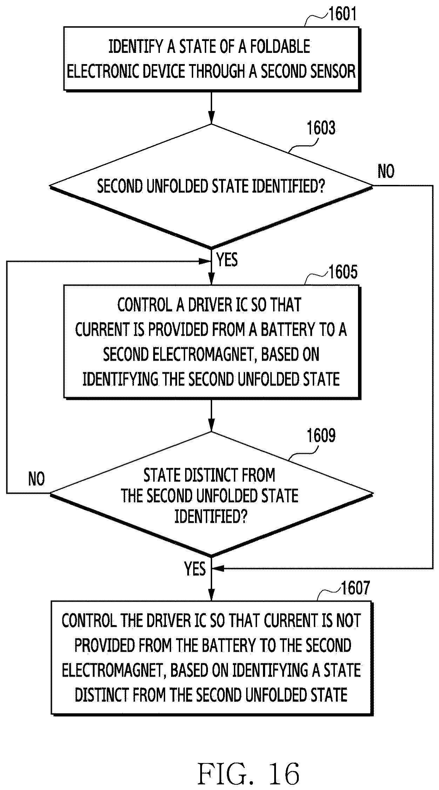

FIG. 16 is a flowchart illustrating an operation of controlling supplying of current to a second electromagnet by a foldable electronic device according to an embodiment.

The operations of FIG. 16 may be substantially the same as the operations of FIG. 15 except for a difference according to a magnet to be controlled. For example, the operations of FIG. 15 are operations for controlling the first electromagnet 1451, which is at least one of the first magnet 1231 and the third magnet 1233, in order to mitigate and/or remove the crease in the first bending portion 1214, and the operations of FIG. 16 are operations for controlling the second electromagnet 1452, which is at least one of the second magnet 1232 and the fourth magnet 1234, in order to mitigate and/or remove the crease in the second bending portion 1215. The operations of FIG. 16 may be performed independently of the operations of FIG. 15. The operations of FIG. 16 may be referred to as operations caused by the foldable electronic device 1000, when the instructions stored in the memory 130 are executed by at least one processor 120.

Referring to FIG. 16, in operation 1601, the instructions, when executed individually or collectively by at least one processor 120, may cause the foldable electronic device 1000 to identify the state of the foldable electronic device 1000 through the second sensor 1420.

According to an embodiment, the second sensor 1420 may be configured to provide data indicating a state (e.g., the second unfolded state, the second folded state, and the second intermediate state) of the foldable electronic device 1000 to the at least one processor 120. For example, the at least one processor 120 may provide data indicating angle information between the second housing part 1020 and the third housing part 1030 to the at least one processor 120. The at least one processor 120 may be configured to receive the data from the second sensor 1420 and identify the state of the foldable electronic device 1000 based on the data. For example, the at least one processor 120 may be configured to identify the second unfolded state of the foldable electronic device 1000, when the angle between the second housing part 1020 and the third housing part 1030 identified from the data is within the first angle range (e.g., about 175 degrees to about 185 degrees). For example, the at least one processor 120 may be configured to identify the second intermediate state of the foldable electronic device 1000, when the angle between the second housing part 1020 and the third housing part 1030 identified from the data is within the second angle range (e.g., about 5 degrees to about 175 degrees). For example, the at least one processor 120 may be configured to identify the second folded state of the foldable electronic device 1000, when the angle between the second housing part 1020 and the third housing part 1030 identified from the data is within the third angle range (e.g., about 0 degrees to about 5 degrees). The numerical values of the above-described angle range are only exemplary, and embodiments of the disclosure are not limited thereto.

In operation 1603, the instructions, when executed individually or collectively by at least one processor 120, may cause the foldable electronic device 1000 to determine whether the second unfolded state of the foldable electronic device 1000 has been identified.

According to an embodiment, the at least one processor 120 may be configured to determine whether the second unfolded state of the foldable electronic device 1000 has been identified, in order to determine whether a condition for supplying current to the second electromagnet 1452 is satisfied. For example, when the identified state of the foldable electronic device 1000 is in the second unfolded state, operation 1605 may be performed. For example, when the identified state of the foldable electronic device 1000 is in a state is distinguished from the second unfolded state, operation 1607 may be performed. Here, when the state of the foldable electronic device 1000 is distinguished from the second unfolded state, it may be referred to as a case in which the second folded state of the foldable electronic device 1000 or the second intermediate state of the foldable electronic device 1000 is identified.

In operation 1605, the instructions, when executed individually or collectively by at least one processor 120, may cause the foldable electronic device 1000 to control the driver integrated circuitry 1440 so that a current is provided from the battery 189 to the second electromagnet 1452, based on identifying the second unfolded state of the foldable electronic device 1000.

According to an embodiment, the at least one processor 120 may magnetize the second electromagnet 1452 based on identifying the second unfolded state of the foldable electronic device 1000. The at least one processor 120 may be configured to control the driver integrated circuitry 1440 to supply a current from the battery 189 to the second electromagnet 1452 for magnetization of the second electromagnet 1452. For example, the driver integrated circuitry 1440 may be controlled by at least one processor 1430 to supply a current supplied from the battery 189 to the second electromagnet 1452 through the power management circuitry 1430. For example, the driver integrated circuitry 1440 may control the second switch circuitry 1462 to electrically connect the driver integrated circuitry 1440 to the second electromagnet 1452, and the current may be provided from the battery 189 to the second electromagnet 1452 through the power management circuitry 1430, the driver integrated circuitry 1440, and the second switch circuitry 1462.

According to an embodiment, as the current is supplied to the second electromagnet 1452, the second electromagnet 1452 may be magnetized. When the second electromagnet 1452 is magnetized, attractive force between the second magnet 1232 and the fourth magnet 1234 may be caused. For example, when the second magnet 1232 corresponds to the second electromagnet 1452, and the fourth magnet 1234 corresponds to a permanent magnet, the attractive force between the second magnet 1232 and the fourth magnet 1234 may occur as the second magnet 1232, which is the second electromagnet 1452, is magnetized. The second bending portion 1215 may be substantially flat, in the second unfolded state of the foldable electronic device 1000. The attractive force may be alleviated or removed by pulling the second bending portion 1215 of the substantially flat display panel 1210.

In operation 1607, the instructions, when executed individually or collectively by at least one processor 120, may cause the foldable electronic device 1000 to control the driver integrated circuitry 1440 so that no current is supplied from the battery 189 to the second electromagnet 1452, based on identifying a state (e.g., the second unfolded state or the second intermediate state) distinct from the second unfolded state of the foldable electronic device 1000.

According to an embodiment, the at least one processor 120 may not magnetize the second electromagnet 1452, based on identifying the second folded state of the foldable electronic device 1000 or the second intermediate state of the foldable electronic device 1000, which is different from the second unfolded state of the foldable electronic device 1000. The at least one processor 120 may be configured to control the driver integrated circuitry 1440 so that no current is supplied from the battery 189 to the second electromagnet 1452 (or refrain from providing current from the battery 189 to the second electromagnet 1452), in order not to magnetize the second electromagnet 1452. For example, the driver integrated circuitry 1440 may be controlled by the at least one processor 120 not to provide a current supplied from the battery 189 to the second electromagnet 1452 through the power management circuitry 1430. For example, the driver integrated circuitry 1440 may control the second switch circuitry 1462 to electrically disconnect the driver integrated circuitry 1440 from the second electromagnet 1452. As the driver integrated circuitry 1440 and the second electromagnet 1452 are electrically disconnected, the second electromagnet 1452 may not be magnetized since the current cannot be provided from the battery 189 to the second electromagnet 1452.

According to an embodiment, as no current is provided to the second electromagnet 1452, the second electromagnet 1452 cannot be magnetized. If the second electromagnet 1452 is not magnetized, attractive force between the second magnet 1232 and the fourth magnet 1234 may not be caused. For example, when the second magnet 1232 corresponds to the second electromagnet 1452, and the fourth magnet 1234 corresponds to a permanent magnet, the second magnet 1232, which is the second electromagnet 1452, is not magnetized, and thus the attractive force between the second magnet 1232 and the fourth magnet 1234 may not be caused. The second bending portion 1215 may be at least partially bent in the second folded state of the foldable electronic device 1000 or the second intermediate state of the foldable electronic device 1000. If the attractive force occurs while the second bending portion 1215 is at least partially bent, damage to the flexible display 1040 may be caused. In order to prevent or reduce damage to the flexible display 1040, the foldable electronic device 1000 may not provide a current to the second electromagnet 1452 in the second folded state of the foldable electronic device 1000 or the second intermediate state of the foldable electronic device 1000.

Following the operation 1605, operation 1609 may be performed. In operation 1609, when the instructions are executed individually or collectively by the at least one processor 120, may cause the foldable electronic device 1000 to determine whether a state distinguished from the second unfolded state (e.g., the second folded state or the second intermediate state of the foldable electronic device 1000) has been identified. For example, when the identified state of the foldable electronic device 1000 is in the second folded state or the second intermediate state, operation 1607 may be performed. For example, when the identified state of the foldable electronic device 1000 is not a state distinguished from the second unfolded state, the operation 1605 may be performed again. Here, whether the second folded state of the foldable electronic device 1000 or the second intermediate state of the foldable electronic device 1000 is identified may be referred to as a case in which the second unfolded state of the foldable electronic device 1000 is not identified.

According to an embodiment, when the state of the foldable electronic device 1000 is changed from the second unfolded state to the second folded state or the second intermediate state, operation 1607 may be performed. In operation 1607, the at least one processor 120 may be configured to control the driver integrated circuitry 1440 so that no current is provided from the battery 189 to the second electromagnet 1452. Since the state of the foldable electronic device 1000 has been changed from the second unfolded state to the second folded state or the second intermediate state, the second bending portion 1215 of the display panel 1210 may be at least partially bent. In this case, the at least one processor 120 may be configured to release magnetization of the second electromagnet 1452 in order to prevent or reduce damage to the flexible display 1040.

According to an embodiment, when the state of the foldable electronic device 1000 is maintained in the second unfolded state, the operation 1605 may be performed. In operation 1605, the at least one processor 120 may be configured to control the driver integrated circuitry 1440 to provide current from the battery 189 to the second electromagnet 1452. Since the state of the foldable electronic device 1000 is maintained in the second unfolded state, the second bending portion 1215 of the display panel 1210 may be substantially flat. In this case, the at least one processor 120 may be configured to maintain the magnetization of the second electromagnet 1452 in order to reduce and/or remove the crease of the second bending portion 1215.

As described above, the foldable electronic device 1000 may be configured to cause an attractive force between the second magnet 1232 and the fourth magnet 1234, based on the second unfolded state of the foldable electronic device 1000. In the second unfolded state of the foldable electronic device 1000, the second bending portion 1215 of the display panel 1210 may not be bent and may be substantially flat. As the second bending portion 1215 that is substantially flat is pulled by the attractive force between the second magnet 1232 and the fourth magnet 1234, the crease may be removed. According to an embodiment, by mitigating and/or removing the crease in the second bending portion 1215, the quality of visual information displayed through the flexible display 1040 may be enhanced.

FIGS. 17, 18, and 19 illustrate folded or unfolded operations of a foldable electronic device according to various embodiments.

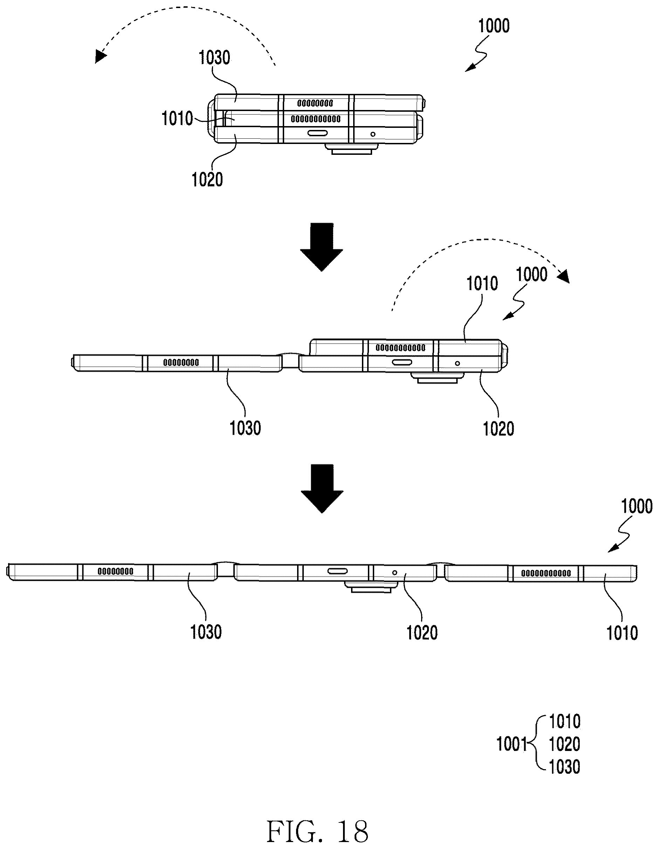

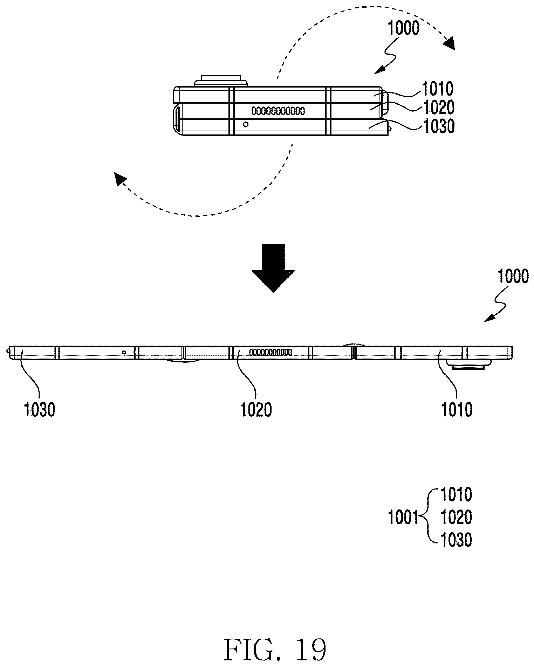

In embodiments shown in FIGS. 17, 18, and 19, the structures of the foldable housing 1001 may be different from each other. For example, the embodiments shown in FIGS. 17 and 18 may be distinguished based on whether a housing part in which a main processor (e.g., an application processor (AP)) is disposed is the first housing part 1010 or the second housing part 1020. For example, the embodiment shown in FIG. 19 may have the same rotation direction of the first housing part 1010 and the third housing part 1030 with respect to the second housing part 1020, as opposed to the embodiments shown in FIGS. 17 and 18.

Referring to FIG. 17, in the first state in which the housing parts of the foldable housing 1001 are fully folded, the first housing part 1010 may be located between the second housing part 1020 and the third housing part 1030. In the first state of the foldable electronic device 1000, the first bending portion (e.g., the first bending portion 1214 of FIG. 12) and the second bending portion (e.g., the second bending portion 1215 of FIG. 12) may be bent. In the first state of the foldable electronic device 1000, both the first electromagnet (e.g., the first electromagnet 1451 of FIG. 14) and the second electromagnet (e.g., the second electromagnet 1452 of FIG. 14) may not be magnetized. In the first state of the foldable electronic device 1000, an attractive force between the first magnet (e.g., the first magnet 1231 of FIG. 12) and the third magnet (e.g., the third magnet 1233 of FIG. 12) and an attractive force between the second magnet (e.g., the second magnet 1232 of FIG. 12) and the fourth magnet (e.g., the fourth magnet 1234 of FIG. 12) may not be caused. The first state may correspond to the first folded state and the second folded state described above.

According to an embodiment, in the foldable electronic device 1000 in the first state, when the third housing part 1030 rotates in a first rotation direction (e.g., clockwise) with respect to the second housing part 1020, the foldable electronic device 1000 may change from the first state to the second state. According to an embodiment, in the second state, the second housing part 1020 and the third housing part 1030 may be disposed side by side with each other, and the first housing part 1010 may be located above the second housing part 1020 (e.g., +z direction). In the second state of the foldable electronic device 1000, the first bending portion 1214 may be bent, and the second bending portion 1215 may be flat. In the first state of the foldable electronic device 1000, the first electromagnet 1451 may not be magnetized, and the second electromagnet 1452 may be magnetized. In the second state of the foldable electronic device 1000, the attractive force between the first magnet 1231 and the third magnet 1233 may not be caused, and the attractive force between the second magnet 1232 and the fourth magnet 1234 may be caused. The crease in the second bending portion 1215 may be mitigated and/or removed by the attractive force between the second magnet 1232 and the fourth magnet 1234. The second state may correspond to the first folded state and the second unfolded state described above.

According to an embodiment, in the foldable electronic device 1000 in the second state, when the first housing part 1010 rotates in a second rotation direction (e.g., counterclockwise) opposite to the first rotation direction with respect to the second housing part 1020, the foldable electronic device 1000 may change from the second state to the third state. The first bending portion 1214 and the second bending portion 1215 may be flat in the third state of the foldable electronic device 1000. Both the first electromagnet 1451 and the second electromagnet 1452 may be magnetized in the third state of the foldable electronic device 1000. In the third state of the foldable electronic device 1000, the attractive force between the first magnet 1231 and the third magnet 1233 and the attractive force between the second magnet 1232 and the fourth magnet 1234 may be caused. By the attractive force between the first magnet 1231 and the third magnet 1233, the crease in the first bending portion 1214 may be mitigated and/or removed. By the attractive force between the second magnet 1232 and the fourth magnet 1234, the crease in the second bending portion 1215 may be mitigated and/or removed. The first state may correspond to the first unfolded state and the second unfolded state described above.

The user may use the foldable electronic device 1000 in various states in addition to the first state, the second state, and the third state. The foldable electronic device 1000 may be configured to control whether to magnetize the first electromagnet 1451 and the second electromagnet 1452, based on the state of the foldable electronic device 1000.

For example, the user may use the foldable electronic device 1000 while rotating the first housing part 1010 with respect to the second housing part 1020. For example, in the above state, an angle between the first housing part 1010 and the second housing part 1020 may be included within the second angle range (e.g., about 5 degrees to about 175 degrees), and an angle between the second housing part 1020 and the third housing part 1030 may be included within the first angle range (e.g., about 175 degrees to about 185 degrees). The above state may correspond to the first intermediate state and the first unfolded state. In the above state, the first bending portion 1214 may be bent, and the second bending portion 1215 may be substantially flat. As described above, the at least one processor 120 may identify the first intermediate state through the first sensor 1410 and may not magnetize the first electromagnet 1451. The at least one processor 120 may identify the second unfolded state through the second sensor 1420 and magnetize the second electromagnet 1452. In the above state, the crease in the first bending portion 1214 may be mitigated and/or removed.

For example, the user may use the foldable electronic device 1000 in a state of rotating the third housing part 1030 with respect to the second housing part 1020. For example, in the above state, an angle between the second housing part 1020 and the third housing part 1030 may be included within the second angle range (e.g., about 5 degrees to about 175 degrees), and an angle between the first housing part 1010 and the second housing part 1020 may be included within the first angle range (e.g., about 175 degrees to about 185 degrees). The state may correspond to the first unfolded state and the first intermediate state. In the above state, the first bending portion 1214 may be flat, and the second bending portion 1215 may be bent. As described above, the at least one processor 120 may identify the first unfolded state through the first sensor 1410 and magnetize the first electromagnet 1451. The at least one processor 120 may identify the second intermediate state through the second sensor 1420 and may not magnetize the second electromagnet 1452. In the above state, the crease in the second bending portion 1215 may be mitigated and/or removed.

Referring to FIG. 18, in the first state in which the housing parts of the foldable housing 1001 are completely folded, the first housing part 1010 may be positioned between the second housing part 1020 and the third housing part 1030. The first bending portion 1214 and the second bending portion 1215 may be bent in the first state of the foldable electronic device 1000. In the first state of the foldable electronic device 1000, both the first electromagnet 1451 and the second electromagnet 1452 may not be magnetized. In the first state of the foldable electronic device 1000, the attractive force between the first magnet 1231 and the third magnet 1233 and the attractive force between the second magnet 1232 and the fourth magnet 1234 may not occur. The first state may correspond to the first folded state and the second folded state described above.

According to an embodiment, in the foldable electronic device 1000 in the first state, when the third housing part 1030 rotates in the first rotation direction (e.g., counterclockwise) with respect to the second housing part 1020, the foldable electronic device 1000 may change from the first state to the second state. According to an embodiment, in the second state, the second housing part 1020 and the third housing part 1030 may be disposed side by side with each other, and the first housing part 1010 may be positioned above the second housing part 1020 (e.g., +z direction). In the second state of the foldable electronic device 1000, the first bending portion 1214 may be bent, and the second bending portion 1215 may be flat. In the first state of the foldable electronic device 1000, the first electromagnet 1451 may not be magnetized, and the second electromagnet 1452 may be magnetized. In the second state of the foldable electronic device 1000, the attractive force between the first magnet 1231 and the third magnet 1233 may not be caused, and the attractive force between the second magnet 1232 and the fourth magnet 1234 may be caused. The crease in the second bending portion 1215 may be mitigated and/or removed by the attractive force between the second magnet 1232 and the fourth magnet 1234. The second state may correspond to the first folded state and the second unfolded state described above.

According to an embodiment, in the foldable electronic device 1000 of the second state, when the first housing part 1010 rotates in the second rotation direction (e.g., clockwise) opposite to the first rotation direction with respect to the second housing part 1020, the foldable electronic device 1000 may change from the second state to the third state. The first bending portion 1214 and the second bending portion 1215 may be flat in the third state of the foldable electronic device 1000. Both the first electromagnet 1451 and the second electromagnet 1452 may be magnetized in the third state of the foldable electronic device 1000. In the third state of the foldable electronic device 1000, the attractive force between the first magnet 1231 and the third magnet 1233 and the attractive force between the second magnet 1232 and the fourth magnet 1234 may be caused. The crease in the first bending portion 1214 may be mitigated and/or removed by the attractive force between the first magnet 1231 and the third magnet 1233. Further, the crease in the second bending portion 1215 may be mitigated and/or removed by the attractive force between the second magnet 1232 and the fourth magnet 1234. The first state may correspond to the first and second unfolded states described above.

Referring to FIG. 19, in the folded state in which the housing parts of the foldable housing 1001 are completely overlapped, the second housing part 1020 may be positioned between the first housing part 1010 and the third housing part 1030. The first hinge assembly 1050 and the second hinge assembly 1060 may have substantially the same width. In the folded state of the foldable electronic device 1000, the first bending portion 1214 and the second bending portion 1215 may be bent. Both the first electromagnet 1451 and the second electromagnet 1452 may not be magnetized in the folded state of the foldable electronic device 1000. In the folded state of the foldable electronic device 1000, the attractive force between the first magnet 1231 and the third magnet 1233 and the attractive force between the second magnet 1232 and the fourth magnet 1234 may not be caused. The above folded state may correspond to the first folded state and the second folded state described above.

According to an embodiment, in the foldable electronic device 1000 of the first state, the first housing part 1010 may rotate in the first rotation direction (e.g., clockwise) with respect to the second housing part 1020, and the third housing part 1030 may rotate in the first rotation direction with respect to the second housing part 1020. By rotation of the first housing part 1010 and the third housing part 1030, the foldable electronic device 1000 may be changed from the folded state to the unfolded state. The first bending portion 1214 and the second bending portion 1215 may be flat in the unfolded state of the foldable electronic device 1000. Both the first electromagnet 1451 and the second electromagnet 1452 may be magnetized in the unfolded state of the foldable electronic device 1000. In the third state of the foldable electronic device 1000, the attractive force between the first magnet 1231 and the third magnet 1233 and the attractive force between the second magnet 1232 and the fourth magnet 1234 may be caused. The crease in the first bending portion 1214 may be mitigated and/or removed by the attractive force between the first magnet 1231 and the third magnet 1233. Further, the crease in the second bending portion 1215 may be mitigated and/or removed by the attractive force between the second magnet 1232 and the fourth magnet 1234. The first state may correspond to the first unfolded state and the second unfolded state described above.

A foldable electronic device 200 is provided. The foldable electronic device 200 may include a foldable housing 201 including a first housing part 210 and a second housing part 220. The foldable electronic device 200 may include a hinge assembly 250 including hinge plates 252 and 253 rotatably connecting the first housing part 210 and the second housing part 220. Each of the hinge plates 252 and 253 may include a first magnet 330. The foldable electronic device 200 may include a flexible display 230. The flexible display 230 may include a display panel including a first planar portion 311, a second planar portion 312, and a bending portion 313 positioned between the first and second planar portions 311 and 312 and configured to be bent by rotation of the first housing part 210 and the second housing part 220. The flexible display 230 may include a support plate 320 disposed under the display panel 310 to support the display panel 310. The support plate 320 may include a first portion 321 disposed under the first planar portion 311 of the display panel 310, a second portion 322 disposed under the second planar portion 312 of the display panel 310, and a third portion 323 disposed under the bending portion 313 of the display panel 310 and including a plurality of slits 324. The flexible display 230 may include a second magnet 340 overlapping the bending portion 313 and the third portion 323 and paired with the first magnet 330. An attractive force between the first magnet 330 and the second magnet 340 may be caused based on an unfolded state of the foldable electronic device 200.

According to an embodiment, the unfolded state of the foldable electronic device 200 may be a state in which an angle between the first housing part 210 and the second housing part 220 is within a specified angle range. In an unfolded state the angle between the first housing part 210 and the second housing part 220 may be such that the planar portions of the display are substantially co-planar. In an unfolded state, the angle between the first housing part and the second housing part may be 180 degrees. In an unfolded state, the angle between the first housing part and the second housing part may be between 175 and 185 degrees. In an unfolded state the display panel may be substantially flat. In an unfolded state the display panel may be substantially flat, except for one or more creases.

According to an embodiment, the foldable electronic device 200 may further include a battery 189. The foldable electronic device 200 may further include a sensor 410 for identifying the unfolded state of the foldable electronic device 200, a folded state of the foldable electronic device 200, and an intermediate state of the foldable electronic device 200 between the unfolded state of the foldable electronic device 200 and the folded state of the foldable electronic device 200. The foldable electronic device 200 may further include a memory 130 including one or more storage media storing instructions. The foldable electronic device 200 may further include at least one processor 120 including processing circuitry. At least one of the first magnet 330 and the second magnet 340 may be an electromagnet 440 electrically connected to the battery 189. The instructions, when executed by the at least one processor 120, may cause the foldable electronic device 200 to identify a state of the foldable electronic device 200 through the sensor 410. The instructions, when executed by the at least one processor 120, may cause the foldable electronic device 200 to control whether to supply current from the battery 189 to the electromagnet 440, based on the identified state of the foldable electronic device 200.

According to an embodiment, the foldable electronic device 200 may further include driver integrated circuitry 430 configured to control supply of current from the battery 189 to the electromagnet 440. The instructions, when executed by the at least one processor 120, may cause the foldable electronic device 200 to identify the unfolded state of the foldable electronic device 200 through the sensor 410. The instructions, when executed by the at least one processor 120, may cause the foldable electronic device 200 to control the driver integrated circuitry 430 to supply current from the battery 189 to the electromagnet 440, based on identifying the unfolded state. The instructions, when executed by the at least one processor 120, may cause the foldable electronic device 200 to identify the folded state of the foldable electronic device 200 through the sensor 410. The instructions, when executed by the at least one processor 120, may cause the foldable electronic device 200 to control the driver integrated circuitry 430 to refrain from supply of current from the battery 189 to the electromagnet 440, based on identifying the folded state or the intermediate state.

According to an embodiment, the foldable electronic device 200 may further include a flexible printed circuit board 810 configured to electrically connect the battery 189 and the electromagnet 440. The current provided from the battery 189 to the electromagnet 440 may be supplied from the battery 189 through the flexible printed circuit board 810 to the electromagnet 440.

According to an embodiment, the flexible display 230 may include a protective film 303 disposed between the display panel 310 and the support plate 320. The second magnet 340 may be disposed between the protective film 303 and the third portion 323 of the support plate 320.

According to an embodiment, the flexible display 230 may include an adhesive layer 304 disposed between the protective film 303 and the first portion 321 of the support plate 320 and between the protective film 303 and the second portion 322 of the support plate 320 and positioned on substantially the same plane as the second magnet 340. A first thickness of the adhesive layer 304 may correspond to a second thickness of the second magnet 340.

According to an embodiment, the second magnet 340 may be disposed under the third part 323 of the support plate 320.

According to an embodiment, the foldable electronic device 200 may further include a cushion 305 disposed under the third part 323 of the support plate 320 and overlapping the first magnet 330 and the second magnet 340.

According to an embodiment, the second magnet 340 may be disposed in the third part 323 of the support plate 320.

According to an embodiment, the hinge assembly 250 may include a support bar 255 disposed under the third portion 323 of the support plate 320 to overlap the bending portion 313 of the display panel 310. The support bar 255 may include the first magnet 330.

According to an embodiment, the foldable housing 201 may further include a third housing part 1030. The foldable electronic device 200 may further include another hinge assembly 1060 including other hinge plates 1162 and 1163 rotatably connecting the second housing part 220 and the third housing part 1030. Each of the other hinge plates 1162 and 1163 may include a second magnet 1232. The display panel 310 may further include a third planar portion 1213 and another bending portion 1215 positioned between the second planar portion 1213 and the third planar portion 1213 and configured to be bent by a rotation of the second housing part 220 and the third housing part 1030. The support plate 320 may further include a fourth portion 1227 disposed under the third planar portion 1213 of the display panel 310 and a fifth portion 1222 disposed under the other bending portion 1215 of the display panel 310 and including a plurality of other slits 1224. The flexible display 230 may further include a fourth magnet 1234 disposed under the other bending portion 1215 and paired with the third magnet 1232.

According to an embodiment, the foldable electronic device 200 may further include a battery 189. The foldable electronic device 200 may further include a first sensor 410 for identifying a first folded state in which the first housing part 210 and the second housing part 220 are folded and a first unfolded state in which the first housing part 210 and the second housing part 220 are unfolded. The foldable electronic device 200 may further include a second sensor 410 for identifying a second folded state in which the second housing part 220 and the third housing part 1030 are folded and a second unfolded state in which the second housing part 220 and the third housing part 1030 are unfolded. The foldable electronic device 200 may further include a memory 130 including one or more storage media storing instructions. The foldable electronic device 200 may further include at least one processor 120 including processing circuitry. At least one of the first magnet 330 and the second magnet 340 may be a first electromagnet 1451 electrically connected to the battery 189. At least one of the second magnet 1232 and the fourth magnet 1234 may be a second electromagnet 1452 electrically connected to the battery 189. The instructions, when executed by the at least one processor 120, may cause the foldable electronic device 200 to control whether to supply current from the battery 189 to the first electromagnet 1451, based on the first unfolded state identified through the first sensor 410. The instructions, when executed by the at least one processor 120, may cause the foldable electronic device 200 to control whether to supply current from the battery 189 to the second electromagnet 1452, based on the second unfolded state identified through the second sensor 410.

According to an embodiment, the foldable electronic device 200 may further include a battery 189. The foldable electronic device 200 may further include driver integrated circuitry 430 configured to control supply of current from the battery 189 to the electromagnet 440. The instructions, when executed by the at least one processor 120, may cause the foldable electronic device 200 to identify the first unfolded state of the foldable electronic device 200 through the first sensor 410. The instructions, when executed by the at least one processor 120, may cause the foldable electronic device 200 to control the driver integrated circuitry 430 to provide a current from the battery 189 to the first electromagnet 1451, based on identifying the first unfolded state. The instructions, when executed by the at least one processor 120, may cause the foldable electronic device 200 to identify a state distinguished from the first unfolded state of the foldable electronic device 200 through the sensor 410. The instructions, when executed by the at least one processor 120, may cause the foldable electronic device 200 to control the driver integrated circuitry 430 to refrain from providing current from the battery 189 to the first electromagnet 1451, based on identifying the state distinguished from the first unfolded state of the foldable electronic device 200.

According to an embodiment, the foldable electronic device 200 may further include driver integrated circuitry 430 configured to control supply of current from the battery 189 to the electromagnet 440. The instructions, when executed by the at least one processor 120, may cause the foldable electronic device 200 to identify the second unfolded state of the foldable electronic device 200 through the second sensor 410. The instructions, when executed by the at least one processor 120, may cause the foldable electronic device 200 to control the driver integrated circuitry 430 to provide current from the battery 189 to the second electromagnet 1452, based on identifying the second unfolded state. The instructions, when executed by the at least one processor 120, may cause the foldable electronic device 200 to identify a state distinguished from the second unfolded state of the foldable electronic device 200 through the sensor 410. The instructions, when executed by the at least one processor 120, may cause the foldable electronic device 200 to control the driver integrated circuitry 430 to refrain from providing current from the battery 189 to the second electromagnet 1452, based on identifying the state distinguished from the second unfolded state of the foldable electronic device 200.

A foldable electronic device 1000 is provided. The foldable electronic device 1000 may include a foldable housing 1001 including a first housing part 1010, a second housing part 1020, and a third housing part 1030. The foldable electronic device 1000 may include a first hinge assembly 1050 including first hinge plates 1152 and 1153 rotatably connecting the first housing part 1010 and the second housing part 1020. Each of the first hinge plates 1152 and 1153 may include a first magnet 1231. The foldable electronic device 1000 may include a second hinge assembly 1060 including second hinge plates 1162 and 1163 rotatably connecting the second housing part 1020 and the third housing part 1030. Each of the second hinge plates 1162 and 1163 may include a second magnet 1232. The foldable electronic device 1000 may include a flexible display 1040. The flexible display 1040 may include a display panel 1210 including a first bending portion 1214 configured to be bent by rotation of the first housing part 1010 and the second housing part 1020, and a second bending portion 1215 configured to be bent by rotation of the second housing part 1020 and the third housing part 1030. The flexible display 1040 may include a support plate 1220 disposed under the display panel 1210 to support the display panel 1210. The support plate 1220 may include a first portion 1221 disposed under the first bending portion 1214 and including a plurality of first slits 1223, and a second portion 1222 disposed under the second bending portion 1215 and including a plurality of second slits 1224. The flexible display 1040 may include a third magnet 1233 disposed between the first bending portion 1214 and the first portion 1221 and overlapping the first magnet 1231. The flexible display 1040 may include a fourth magnet 1234 disposed between the second bending portion 1215 and the second portion 1222 and overlapping the second magnet 1232. An attractive force between the first magnet 1231 and the third magnet 1233 may be caused based on a first unfolded state in which the first housing part 1010 and the second housing part 1020 are unfolded. An attractive force between the second magnet 1232 and the fourth magnet 1234 may be caused based on a second unfolded state in which the second housing part 1020 and the third housing part 1030 are unfolded.

According to an embodiment, the foldable electronic device 1000 may further include a battery 189. The foldable electronic device 1000 may further include a first sensor 1410 for identifying the first unfolded state. The foldable electronic device 1000 may further include a second sensor 1420 for identifying the second unfolded state. The foldable electronic device 1000 may further include a memory 130 including one or more storage media storing instructions. The foldable electronic device 1000 may further include at least one processor 120 including processing circuitry. At least one of the first magnet 1231 and the third magnet 1233 may be a first electromagnet 1451 electrically connected to the battery 189. At least one of the second magnet 1232 and the fourth magnet 1234 may be a second electromagnet 1452 electrically connected to the battery 189. The instructions, when executed by the at least one processor 120, may cause the foldable electronic device 1000 to control whether to supply current from the battery 189 to the first electromagnet 1451, based on the first unfolded state identified through the first sensor 1410. The instructions, when executed by the at least one processor 120, may cause the foldable electronic device 1000 to control whether to supply current from the battery 189 to the second electromagnet 1452, based on the second unfolded state identified through the second sensor 1420.

According to an embodiment, the foldable electronic device 1000 may further include driver integrated circuitry 1440 configured to control supply of current from the battery 189 to the second electromagnet 1452. The instructions, when executed by the at least one processor 120, may cause the foldable electronic device 1000 to identify the first unfolded state of the foldable electronic device 1000 through the first sensor 1410. The instructions, when executed by the at least one processor 120, may cause the foldable electronic device 1000 to control the driver integrated circuitry 1440 so that current is supplied from the battery 189 to the first electromagnet 1451, based on identifying the first unfolded state. The instructions, when executed by the at least one processor 120, may cause the foldable electronic device 1000 to identify a state distinguished from the first unfolded state of the foldable electronic device 1000 through the first sensor 1410. The instructions, when executed by the at least one processor 120, may cause the foldable electronic device 1000 to control the driver integrated circuitry 1440 so that current is not provided from the battery 189 to the first electromagnet 1451, based on identifying the state distinguished from the first unfolded state of the foldable electronic device 1000.

According to an embodiment, the foldable electronic device 1000 may further include driver integrated circuitry 1440 configured to control supply of current from the battery 189 to the second electromagnet 1452. The instructions, when executed by the at least one processor 120, may cause the foldable electronic device 1000 to identify the second unfolded state of the foldable electronic device 1000 through the second sensor 1420. The instructions, when executed by the at least one processor 120, may cause the foldable electronic device 1000 to control the driver integrated circuitry 1440 to provide current from the battery 189 to the second electromagnet 1452, based on identifying the second unfolded state. The instructions, when executed by the at least one processor 120, may cause the foldable electronic device 1000 to identify the second folded state of the foldable electronic device 1000 through the sensor 410. The instructions, when executed by the at least one processor 120, may cause the foldable electronic device 1000 to control the driver integrated circuitry 1440 so that current is not provided from the battery 189 to the second electromagnet 1452, based on identifying the second folded state.

According to an embodiment, the third magnet 1233 may be disposed between the first bending portion 1214 of the display panel 1210 and the first portion 1221 of the support plate 1220. The fourth magnet 1234 may be disposed between the second bending portion 1215 of the display panel 1210 and the second portion 1222 of the support plate 1220.

A foldable electronic device according to an embodiment may comprise: a foldable housing including a first housing part and a second housing part; a hinge assembly rotatably connecting the first housing part and the second housing part, the hinge assembly comprising at least one first magnet; and a flexible display which comprises a display panel. The display panel comprises a first planar portion, a second planar portion, and a bending portion, the bending portion being disposed between the first planar portion and the second planar portion. The bending portion is configured to be bent by a rotation of the first housing part with respect to the second housing part. The flexible display further comprises a support plate disposed under at least the bending portion of the display panel, the support plate comprising at least one second magnet. The at least one first magnet and the at least one second magnet are configured such that, when the bending portion of the display panel is in an unfolded state, there is an attractive force between the at least one first magnet and the at least one second magnet.

The at least one first magnet and the at least one second magnet may be configured such that, when the bending portion of the display panel is a folded state, there is a reduced attractive force between the at least one first magnet and the at least one second magnet, when compared to the attractive force between the at least one first magnet and the at least one second magnet when the display panel is in an unfolded state.

The hinge assembly may be configured such that the second magnet and the first magnet are separated by a first distance when the bending portion of the display panel is in an unfolded state, and the hinge assembly may be further configured such that the second magnet and the first magnet are separated by a second distance when the bending portion of the display panel is in a folded state, the second distance being greater than the first distance.

In an unfolded state the bending portion may be substantially flat. In a folded state the bending portion of the display panel may be bent, for example to allow the first planar portion of the display panel to face the second planar portion of the display panel.

The first magnet and/or the second magnet may comprise an electromagnet, and the foldable electronic device may comprise a processor configured to provide a current to the electromagnet when the bending portion of the display panel is in an unfolded state, such that the electromagnet generates a magnetic field.

The support plate may be attached to the bending portion. The support plate may be adhered, bonded or joined to the bending portion.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment, the electronic devices are not limited to those described above.

It should be appreciated that various embodiments and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B", "A, B, or C", "at least one of A, B, and C", and "at least one of A, B, or C" may include any one of, or all possible combinations of the items enumerated together in a corresponding one of the phrases. As used herein, such terms as "1st" and "2nd", or "first" and "second" may be used to simply distinguish a corresponding component from another, and does not limit the components in other aspects (e.g., importance or order). It is to be understood that if an element (e.g., a first element) is referred to, with or without the term "operatively" or "communicatively", as "coupled with", "coupled to", "connected with", or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may be interchangeably used with other terms, for example, 'logic', 'logic block', 'part', 'portion', or 'circuitry'. A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., an internal memory 136 or an external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments disclosed herein may be included and provided in a computer program product. The computer program product may be traded as a product between a seller and a buyer. The computer program product may be distributed in the form of a machine-readable storage medium (e.g., a compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

It will be appreciated that all of the above-described embodiments, and their technical features, may be combined with one another in each and every combination, potentially unless there is a conflict between two embodiments or features. That is, each and every combination of two or more of the above-described embodiments is envisaged and included within the present disclosure. One or more features from any embodiment may be incorporated in any other embodiment, and provide a corresponding advantage or advantages.

## Claims

1. A foldable electronic device, comprising:
a foldable housing including a first housing part and a second housing part;
a hinge assembly including hinge plates rotatably connecting the first housing part and the second housing part, each of the hinge plates comprising a first magnet;
a flexible display comprising:
a display panel comprising:
a first planar portion,
a second planar portion, and
a bending portion, disposed between the first planar portion and the second planar portion, configured to be bent by a rotation of the first housing part and the second housing part,
a support plate disposed under the display panel to support the display panel, the support plate including:
a first portion disposed under the first planar portion,
a second portion disposed under the second planar portion, and
a third portion, disposed under the bending portion, comprising a plurality of slits, and
a second magnet, overlapping the bending portion of the display panel and the third portion of the support plate, paired with the first magnet,
wherein an attractive force between the first magnet and the second magnet is caused based on an unfolded state of the foldable electronic device.

2. The foldable electronic device of claim 1,
wherein the unfolded state of the foldable electronic device is a state in which an angle between the first housing part and the second housing part is within a specified angle range.

3. The foldable electronic device of claim 1 or 2, further comprising:
a battery;
a sensor for identifying the unfolded state of the foldable electronic device, a folded state of the foldable electronic device, and an intermediate state of the foldable electronic device between the unfolded state of the foldable electronic device and the folded state of the foldable electronic device;
memory including one or more storage mediums storing instruction; and
at least one processor including processing circuitry,
wherein at least one of the first magnet or the second magnet corresponds an electromagnet electrically connected to the batter,
wherein the instruction, when executed by the at least one processor individually or collectively, cause the foldable electronic device:
identify a state of the foldable electronic device through the sensor, and
control whether or not current is supplied from the battery to the electromagnet based on the identified state of the foldable electronic device.

4. The foldable electronic device of claim 3, further comprising driver integrated circuitry, IC, configured to control supply of current from the battery to the electromagnet,
wherein the instruction, when executed by the at least one processor individually or collectively, cause the foldable electronic device:
identify the unfolded state of the foldable electronic device through the sensor,
control the driver IC to supply current from the battery to the electromagnet based on identifying the unfolded state,
identify the folded state or the intermediate state of the foldable electronic device through the sensor, and
control the driver IC to refrain from supply of current from the battery to the electromagnet.

5. The foldable electronic device of claim 4, further comprising a flexible printed circuit board, FPCB, configured to electrically connect the battery and the electromagnet,
wherein the current provided from the battery to the electromagnet is supplied from the battery, through the FPCB, to the electromagnet.

6. The foldable electronic device of any one of claims 1 to 5,
wherein the flexible display includes a protective film disposed between the display panel and the support plate, and
wherein the second magnet is disposed between the protective film and the third portion of the support plate.

7. The foldable electronic device of claim 6,
wherein the flexible display includes an adhesive layer, positioned on substantially a same plane with the second magnet, disposed between the protective film and the first portion of the support plate and between the protective film and the second portion of the support plate, and
wherein a first thickness of the adhesive layer corresponds to a second thickness of the second magnet.

8. The foldable electronic device of any one of claims 1 to 7,
wherein the second magnet is disposed under the third portion of the support plate.

9. The foldable electronic device of any one of claims 1 to 8, further comprising a cushion, disposed under the third portion of the support plate, overlapping the first magnet and the second magnet.

10. The foldable electronic device of any one of claims 1 to 9,
wherein the second magnet is disposed in the third portion of the support plate.

11. The foldable electronic device of any one of claims 1 to 10,
wherein the first hinge assembly includes a support bar disposed under the third portion of the support plate to overlap the bending portion of the display panel, and
wherein the support bar includes the first magnet.

12. The foldable electronic device of any one of claims 1 to 11,
wherein the foldable housing further includes a third housing part,
wherein the foldable electronic device further includes another hinge assembly comprising other hinge plates rotatably connecting the second housing part and the third housing part,
wherein each of the other hinge plates includes a third magnet,
wherein the display panel further includes a third planar portion and another bending portion, disposed between the second planar portion and the third planar portion, configured to be bent by a rotation of the second housing part and the third housing part,
wherein the support plate further includes a fourth portion disposed under the third portion of the display panel and a fifth portion, disposed under the other bending portion, comprising another plurality of slits, and
wherein the flexible display further includes a fourth magnet, disposed under the other bending portion, paired with the third magnet.

13. The foldable electronic device of claim 12, further comprising:
a battery;
a first sensor for identifying a first unfolded state in which the first housing part and the second housing part are unfolded;
a second sensor for identifying a second unfolded state in which the second housing part and the third housing part are unfolded;
memory including one or more storage mediums storing instruction; and
at least one processor including processing circuitry,
wherein at least one of the first magnet or the second magnet corresponds an electromagnet electrically connected to the batter,
wherein at least one of the third magnet or the fourth magnet corresponds an electromagnet electrically connected to the batter, and
wherein the instructions, when executed by the at least one processor individually or collectively, cause the foldable electronic device to:
control whether to supply current from the battery to the first electromagnet based on the first unfolded state identified through the first sensor, and
control whether to supply current from the battery to the second electromagnet based on the second unfolded state identified through the second sensor.

14. The foldable electronic device of claim 13, further comprising driver integrated circuitry, IC, configured to control supply of current from the battery to the first electromagnet and the second electromagnet,
wherein the instructions, when executed by the at least one processor individually or collectively, cause the foldable electronic device to:
identify the first unfolded state of the foldable electronic device through the first sensor,
control the driver integrated circuit to supply current from the battery to the first electromagnet based on identifying the first unfolded state,
identify a state different from the first unfolded state of the foldable electronic device through the first sensor, and
control the driver integrated circuitry to refrain from supply of current from the battery to the first electromagnet based on identifying the state different from the first unfolded state of the foldable electronic device.

15. The foldable electronic device of claim 13 or 14, further comprising driver integrated circuitry, IC, configured to control supply of current from the battery to the first electromagnet and the second electromagnet,
wherein the instruction, when executed by the at least one processor individually or collectively, cause the foldable electronic device:
identify the second unfolded state of the foldable electronic device through the second sensor,
control the driver integrated circuitry to supply current from the battery to the second electromagnet based on identifying the second unfolded state,
identify a state different from the second unfolded state of the foldable electronic device through the second sensor, and
control the driver integrated circuitry to refrain from supply of current from the battery to the second electromagnet based on identifying the state different from the second unfolded state of the foldable electronic device.
